(19) **Europäisches Patentamt**
**European Patent Office**
**Office européen des brevets**

(11) **EP 4 597 317 A1**

(12) **EUROPEAN PATENT APPLICATION**
published in accordance with Art. 153(4) EPC

(43) Date of publication:
**06.08.2025 Bulletin 2025/32**

(21) Application number: **23896551.1**

(22) Date of filing: **16.11.2023**

(51) International Patent Classification (IPC):
**G06F 9/50** *(2006.01)*    **G06N 3/0464** *(2023.01)*

(52) Cooperative Patent Classification (CPC):
Y02D 10/00

(86) International application number:
**PCT/CN2023/132073**

(87) International publication number:
**WO 2024/114399 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2022 CN 202211530586**

(71) Applicant: **Cloud Intelligence Assets Holding (Singapore) Private Limited**
**Singapore 189554 (SG)**

(72) Inventors:
• **DIAO, Lansong**
  **Beijing 100102 (CN)**
• **WANG, Siyu**
  **Beijing 100102 (CN)**
• **CAO, Zongyan**
  **Beijing 100102 (CN)**
• **LIU, Xiaoyong**
  **Beijing 100102 (CN)**
• **LIN, Wei**
  **Hangzhou, Zhejiang 310030 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **OPTIMIZATION METHOD FOR DISTRIBUTED EXECUTION OF DEEP LEARNING TASK, AND DISTRIBUTED SYSTEM**

(57)    Disclosed are an optimization method for distributed execution of a deep learning task and a distributed system. The method includes that: a computation graph is generated based on a deep learning task and hardware resources are allocated for the distributed execution of the deep learning task; the allocated hardware resources are grouped to obtain at least one grouping scheme; for each grouping scheme, tensor information related to multiple operators contained in the computation graph is split based on the value of at least one factor under this grouping scheme to obtain multiple candidate splitting solutions; and an optimal efficiency solution for executing the deep learning task of the hardware resources is selected by using a cost model. Through operator splitting based on device grouping combined with optimization solving based on the cost model, automatic optimization of distributed execution for various deep learning tasks is realized. Furthermore, computation graph partitioning based on grouping can be introduced, and the solving space can be restricted according to different levels of optimization, thereby generating a distributed execution solution of required optimization level within controllable time.

FIG. 5

## Description

The present disclosure claims priority of Chinese Patent Application No. 202211530586.3, filed to China National Intellectual Property Administration on December 01, 2022 and titled "Optimization Method for Distributed Execution of Deep Learning Task and Distributed System", the content of which is hereby incorporated by reference in its entirety.

TECHNICAL FIELD

The present disclosure relates to the field of deep learning, and more particularly, to an optimization method for distributed execution of a deep learning task and a distributed system.

BACKGROUND OF THE INVENTION

Artificial intelligence has achieved rapid development in recent years, obtaining good application effects in fields such as image classification, detection, video and speech processing, and still possesses broad prospects for development. Neural network is at the core of artificial intelligence applications, with deep learning neural network algorithms being one of the most common types of neural network models. The workload characteristics of deep learning neural networks are computation and data intensive. Multiply-add operations required for neural network computations are typically on the order of G. For example, the computation amount of a current Single Shot MultiBox Detector (SSD) type neural network reaches 120G operations. Parameters required for training and subsequent inference of neural networks usually range from M to several hundred M bytes. For example, the parameter quantity for a classification neural network Visual Geometry Group (VGG) is up to 480M bytes. Since a conventional computer, or even a single dedicated server cannot provide such high computing power and be equipped with sufficient memory, an increasing amount of neural network training and inference is executed in a distributed manner on a specialized neural network platform.

Distributed execution requires the division of data or models of deep learning tasks so that nodes assigned with execution tasks can perform respective computations of the nodes. In related art, how to divide a deep learning task, especially concerning performance tuning around large-scale distributed models, still needs to be manually performed by professionals after considering multiple factors, resulting in significant time expenditure and inefficiency.

Therefore, an improved solution for the distributed execution and division of the deep learning task has not been provided yet.

SUMMARY OF THE INVENTION

Embodiments of the present disclosure aim to solve a technical problem of providing an optimization method for distributed execution of a deep learning task and a distributed system. The optimization solution of the present disclosure achieves automatic optimization of distributed execution for various types of deep learning tasks through operator slicing based on device grouping combined with optimization solving based on a cost model. The embodiments of the present disclosure can introduce computation graph partitioning based on grouping, and further impose limitations on a solution space according to different levels of optimization, thereby being capable of generating a distributed execution solution of required optimization level within a controllable time period.

In a first aspect of the embodiments of the present disclosure, an optimization method for distributed execution of a deep learning task is provided, which includes that: a computation graph is generated based on a deep learning task and hardware resources are allocated for the distributed execution of the deep learning task; the allocated hardware resources are grouped to obtain at least one grouping scheme, each grouping scheme including at least one factor obtained by factorizing the number of devices in the hardware resources; for each grouping scheme, based on at least one factor under this grouping scheme and tensor information related to multiple operators contained in the computation graph, multiple candidate splitting solutions are obtained, where the multiple candidate splitting solutions are acquired by using the value of at least one factor under this grouping scheme as a splitting value to perform splitting on tensors related to the multiple operators in different dimensions; and an optimal efficiency solution is selected, by using a cost model, from the multiple candidate splitting solutions as a distributed execution splitting solution, where the distributed execution splitting solution is used for executing the deep learning task by the hardware resources.

In a second aspect of the embodiments of the present disclosure, a distributed system for executing a deep learning task is provided, including: a master node, arranged for executing the optimization method for distributed execution of the deep learning task according to the first aspect of the embodiments of the present disclosure and sending task sub-graphs generated based on the distributed execution splitting solution to the hardware resources for the execution of the deep learning task; and an execution node, including at least one hardware device as the hardware resources, arranged for executing the deep learning task based on the distributed execution splitting solution.

In a third aspect of the embodiments of the present disclosure, a computing device is provided, including: a processor; and a memory storing executable code, when the executable code is executed by the processor, controlling the processor to execute the method according to the first aspect of the embodiments of the present disclosure.

In a fourth aspect of the embodiments of the present disclosure, a non-transitory machine-readable storage medium storing executable code, where when the executable code is executed by a processor of an electronic device, controlling the processor to execute the method according to the first aspect of the embodiments of the present disclosure.

BRIEF DESCRIPTION OF DRAWINGS

Through combining with the accompanying drawings, a more detailed description of exemplary embodiments of the present disclosure will make the above and other purposes, features, and advantages of the present disclosure become more apparent, where in the exemplary embodiments of the present disclosure, identical reference numerals typically represent identical components.

FIG. 1 illustrates an example composition of a typical CNN.

FIG. 2 illustrates an example of a computation graph for training a CNN network built on a deep learning framework.

FIG. 3 illustrates an example of a tensor.

FIG. 4 illustrates examples of several splits for a batch matmul operator.

FIG. 5 illustrates a schematic flow diagram of an optimization method for distributed execution of a deep learning task according to some embodiments of the present disclosure.

FIG. 6A-FIG. 6F illustrate examples of different splits performed on operators within a computation graph.

FIG. 7 illustrates examples of obtaining distributed execution splitting solutions under multiple device grouping schemes.

FIG. 8 illustrates a schematic composition of a distributed system for executing a deep learning task.

FIG. 9 illustrates a schematic diagram of a master-slave architecture in the distributed system according to some embodiments of the present disclosure.

FIG. 10 illustrates a brief process example of distributed computing executed by a master-slave architecture of the distributed system o according to some embodiments of the present disclosure.

FIG. 11 illustrates communication operations in case of mismatched splitting strategies.

FIG. 12 describes communication overhead situations of a graph structure composed of multiple dot operators under different distributed strategies.

FIG. 13 illustrates two examples of pipeline parallelism.

FIG. 14 illustrates an example of assessing positions for partitioning a computation graph based on computation time consumption.

FIG. 15 illustrates a structural schematic diagram of a computing device arranged for implementing an optimization method for distributed execution of a deep learning task according to some embodiments of the present disclosure.

DETAILED DESCRIPTION OF THE INVENTION

Embodiments of the present disclosure provide more detailed description with reference to the accompanying drawings. Although the drawings illustrate embodiments of the present disclosure, it should be understood that the present disclosure can be implemented in various forms without being limited by the described embodiments. On the contrary, these embodiments are provided to make the present disclosure thorough and complete, and to fully convey the scope of the present disclosure to a person having ordinary skill in the art.

The continuous development of machine learning computing power has promoted the development and application of models with extremely large parameter scales and domain foundational models, making efficient Artificial Intelligence (AI) distributed computing frameworks and platform technologies an important challenge.

Data Parallelism is a common form for distributed training of deep learning models to divide training data samples into multiple parts and simultaneously train identical copies of model parameters on different devices. The parameter gradients generated during training are aggregated through a network to update parameters. For models with extremely large parameters, parameters cannot be replicated and the parameters are stored on a single device, so that data parallelism encounters bottlenecks. At this time, support for splitting each model to achieve distributed support for large models becomes necessary, thus involving Model Parallelism. Common operations of model parallelism include partitioning the entire computation graph onto different devices according to different sequential stages or dividing huge individual computational operators (data) for calculation by multiple devices together and performing data exchange or aggregation at specific locations. The model parallelism of computation graph partitioning is combined with the data parallelism of the computation graph partitioning, and multiple sample micro-batches are processed on the same device to implement Pipeline Parallelism and aggregate results after processing a certain number of samples, thereby improving the resource utilization rate of computing devices.

Through these parallel approaches, the industry can leverage larger scale computing platforms to support the development of larger deep learning models. For example, advanced language models released in the first half of 2022 have reached 540 billion parameters, using 6144 Tensor Processing Unit (TPU) processors to achieve a hardware Floating Point Operations Per Second (FLOPS) efficiency of 57.8%. Despite some industry references for performance tuning around large-scale distributed models, due to the need to combine specific structures and computer-memory characteristics of models, considering the heterogeneity of hardware platforms and network connections, the entire process remains highly complex, requiring professionals to manually perform performance tuning after considering all factors, resulting in significant time consumption and low automation levels.

The embodiments of the present disclosure provide a distributed training platform for a deep learning task and an optimized execution method, capable of holistically modeling distributed model parallel optimization methods (including data parallelism, model parallelism, pipeline parallelism, gradient accumulation, data reuse optimization, communication volume optimization, etc.) for solving at different optimization levels, and employing joint runtime environment and compilation optimizations to meet various needs under different scenarios, automatically generating exclusive optimization solutions for each model, thereby improving the execution efficiency of an individual task, and enhancing overall device utilization on the distributed training platform.

To facilitate understanding of the principles of the present disclosure, relevant concepts of executing the deep learning task will be described as follows.

Artificial Neural Network (ANN) is the core of artificial intelligence applications, with a deep learning neural network algorithms being one of the most common types of neural network models. A deep learning neural network consists of a series of layers with a certain depth and the workload feature is intensive computation and data. A common type of deep learning model includes the structure of Convolutional Neural Network (CNN). The weight-sharing network structure of the CNN resembles a biological neural network, thereby reducing the complexity of the network model and the number of weights. This advantage is more pronounced when the input to the network is multidimensional images, allowing images to be directly used as network inputs without undergoing complex feature extraction and data reconstruction processes required by traditional recognition algorithms. A convolutional network is specially a designed multilayer perceptron for recognizing two-dimensional shapes, offering high invariance to transformations such as translation, scaling, tilting, or other forms of distortion. In recent years, a Transformer model based on self-attention mechanisms has gained rapid development in fields like computer vision and language models (e.g., pre-trained language model Bert) due to their larger receptive fields compared with the CNN, thereby making it easier to address long-range dependencies.

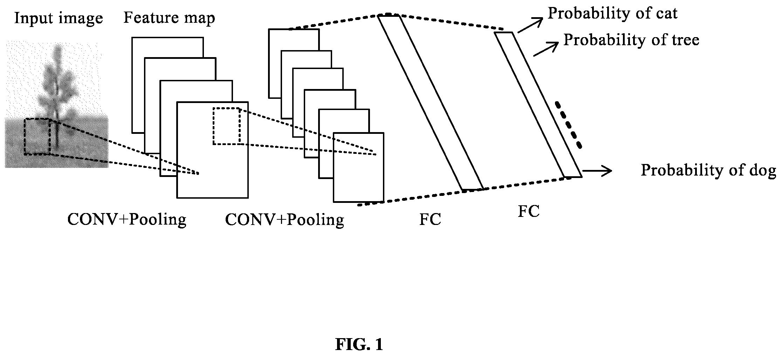

Although new model structures continue to emerge, the following explanation of basic neural network concepts will still refer to representative the CNN. FIG. 1 shows an example composition of a typical CNN. As shown in FIG. 1, a typical CNN consists of a series of layers operating in sequence.

Parameters of the CNN model are referred to as "weights". The first layer of the CNN model reads an input image and outputs a series of feature maps. The subsequent layer reads the feature maps produced by the preceding layer and output new feature maps. The final classifier outputs probabilities of the input image belonging to a particular category. CONV layers (convolutional layers) and FC layers (fully connected layers) are two fundamental layer types in the CNN model. After the CONV layers, pooling layers are typically contained.

A CONV layer takes a series of feature maps as input and obtains output feature maps through convolution kernels. Usually, a non-linear layer, i.e., a non-linear activation function, connected after CONV layers is applied to each element of the output feature maps. The commonly used activation function is a ReLU function, and this layer is often called the ReLU layer. Pooling layers: usually connected after CONV layers, used for outputting the maximum or average value of each subarea in the feature maps. This non-linear "downsampling" not only reduces the size and computation of feature maps for the next layer but also provides translational invariance. The CNN model is used for image classification during forward inference.

Before deploying a model for inference (e.g., image classification), the model is first required to be trained. Through importing a large amount of training data, parameters of each layer of the neural network model, such as weights and biases, are determined.

A training model represents learning (determining) ideal values for all weights and biases through labeled samples. These determined weights and biases enable high-accuracy inference on input features during the deployment phase of the neural network, e.g., correctly classifying input images.

In supervised learning, machine learning algorithms learn parameters through examining multiple samples and trying to find a model that minimizes loss, a process known as empirical risk minimization.

Loss penalizes poor predictions. That is, the loss is a numerical value indicating how accurately the model predicts for a single sample. In response to the prediction of the model is entirely accurate, the loss is zero; otherwise, the loss will be higher. The goal of the training model is to find a set of weights and biases with "smaller" average loss across all samples.

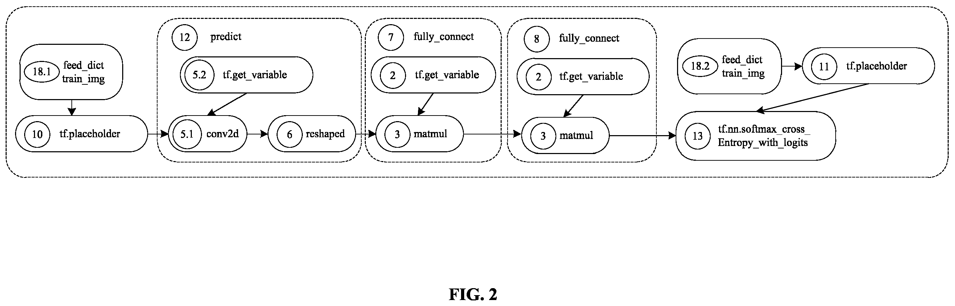

During the training of neural networks, to quantify whether current weights and biases allow the network inputs to fit all network inputs, one loss function needs to be defined (such as cross_entropy used in FIG. 2 below). Thus, the purpose of a training network is transformed into the process of minimizing the loss function of weights and biases. Typically, the gradient descent algorithm (a backward propagation algorithm is used in multilayer neural network training) is employed to achieve the aforementioned minimization.

In the backward propagation algorithm, a repetitive iterative process related to forward propagation and backward propagation is provided. A forward propagation process is a process where neurons between layers, connected through weight matrices, cause stimuli (feature values) to be passed from one layer to the next through the activation function of each layer. In the backward propagation, errors of the current layer are required to be derived from errors of the next layer. Through the iterative process of forward and backward propagation, weights and biases are adjusted to gradually approach the minimum value of the loss function, thereby completing the training of the neural network.

A deep learning framework provides building blocks for designing, training, and validating neural networks through high-level programming interfaces. In other words, the deep learning framework offers implementation paths for specific algorithms of neural networks (e.g., neural network construction as shown in FIG. 1).

With the advancement of deep learning and neural network algorithms, numerous top-level deep learning frameworks aimed at researchers and developers have emerged, such as TensorFlow and PyTorch. The developers use frameworks, such as DSL and API, to design different computation graph models to accomplish specific tasks, such as facial recognition, image detection, speech recognition, etc.

Programming styles of these computation frameworks vary greatly. Regardless of whether compiled languages or scripting languages are used, calculations proceed step-by-step to produce results. However, TensorFlow and Pytorch differ in that TensorFlow and Pytorch first require constructing a computation graph through programming, set data as input and perform computations as specified by the computation graph to obtain computation results. This approach allows escaping the limitations of programming languages, thereby aiding decoupling between front-end and back-end, and presenting more intuitive graphical effects.

A computation graph model consists of nodes and edges. The nodes represent operators, the edges represent dependencies among computations, and solid lines represent dependencies related to data transmission, transmitted data being tensors.

FIG. 2 illustrates an example of a computation graph for training a CNN network built on a deep computation framework. The computation graph shown in FIG. 2 is obtained from CNN network training code developed according to TensorFlow programming. In the computation graph, Pad or BiasAdd adjacent to Conv2d (two-dimensional convolution) are merged into the edges represented by this Conv2d, and all constant nodes are merged into attributes of edges corresponding to operators, thereby constructing a directed acyclic graph.

In response to training a neural network, it is necessary to provide a batch of training samples each time. In response to data selected for each iteration being required to be expressed through constants, it will lead to an extremely large computation graph in TensorFlow. Since every time a constant is added, TensorFlow adds a node in the computation graph, while placeholder solves this problem, with one node for placeholder existing. The value of each placeholder is determined by feed_dict (dictionary).

In a data input stage at the far left of the computation graph, a dictionary achieves inputting an initial training image through sending a training image (train_img) to the placeholder. In a predict box, conv2d (two-dimensional convolution) operation uses convolution kernels obtained by get_variable to perform convolution on input data, and the reshaped operation makes data after convolution meet shape requirements for various Application Programming Interface (API) calls within deep learning frameworks. After multiple convolution layers (convolution operations within the predict box are repeated, that is, there are multiple convolution + pooling operations as shown in FIG. 1), feature values are sent to a first fully connected layer and full connection calculation is implemented using vectors obtained by get_variable. The feature values are sent to a second fully connected layer and full connection calculation is implemented using vectors obtained by get_variable to obtain computation results. The computation results are backpropagated based on softmax classification (softmax_cross_entropy_with_logits) by feeding training labels (train_lab) to placeholders through the dictionary. After inputting batches of training images for multiple rounds of training, parameters (for example, values of convolution kernels) converge to a relatively fixed distribution, thereby these parameters can be used as trained neural network parameters for predicting new images.

FIG. 2 shows a dynamic computation graph. That is, after using one operator, this operator is dynamically added to an implicit default computation graph and immediately executed to obtain computation results, thus facilitating debugging and usage.

In CNN computation based on deep frameworks (including training and prediction), feature values flow sequentially along node operations in FIG. 2, specifically along the path conv2d → reshaped → matmul → matmul → softmax _cross_entropy_with_logits. Herein, the feature values are regarded as operands of input operators in the computation graph and computation results outputted by operators, and are usually multi-dimensional matrices, known as tensors. This is also the origin of the name of the deep framework TensorFlow.

Each tensors has a shape. The shape refers to the length (number of elements) of each axis of this tensor. Rank refers to the number of axes of this tensor. The rank of a scalar is 0, the rank of a vector is 1, and the rank of a matrix is 2. Axis or dimension is used for indicating a specific dimension of this tensor. Size or dimension refers to the total number of items in this tensor, that is, the product of a shape vector.

Indexes are commonly used for referring to axes. Axes are typically ordered from global to local: first batch, then spatial dimensions, and finally features at each position, thereby allowing feature vectors to be located in contiguous regions in memory.

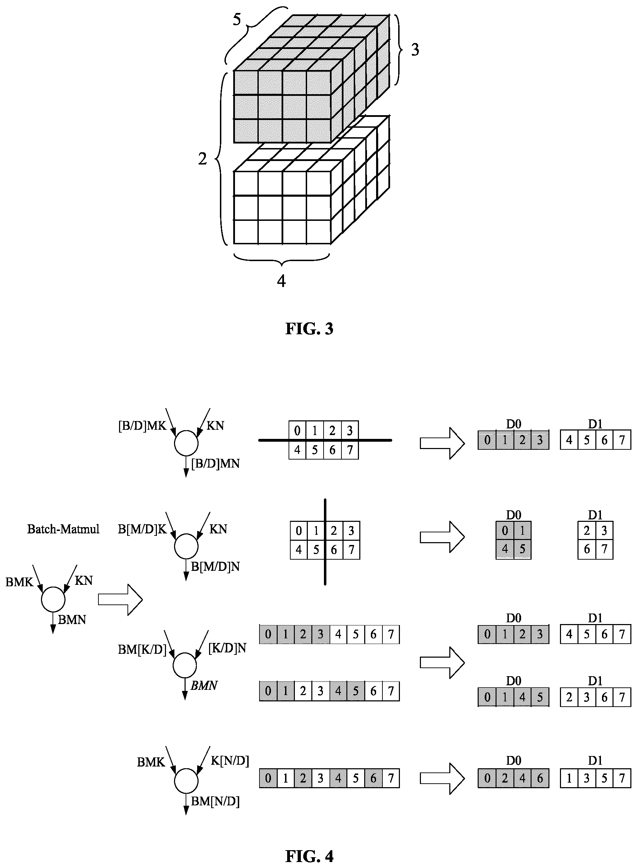

FIG. 3 illustrates an example of a tensor. The tensor is a tensor of rank 4, with shape denoted as [2, 4, 5, 3], and size (dimension) being 120, that is, containing 120 elements. In some embodiments, this tensor includes four dimensions, including Batch, Width, Height, and Feature. For example, in response to setting $4 \times 5$ pixel RGB image as training images, and training two images at a time as one batch, an input tensor shown in FIG. 3 is obtained. At this time, each unit cube in the figure represents values of R or G or B for a certain pixel of a certain training image.

It should be understood that FIG. 3 provides an example with a smaller amount of data for ease of illustration. In real-world common training scenarios, each training image has higher resolution, for example $40 \times 60$ pixels, each batch trains more images, for example 512, and images used for training are not RGB images. Additionally, although the tensor is illustrated as a representation of a four-dimensional tensor in three-dimensional space for ease of understanding in the figure, such representation is generally not intended to describe space.

Tensors flow unidirectionally within a computation graph implemented as a directed acyclic graph, for example from left to right in FIG. 2, and shapes change due to operations by node operators. For instance, convolution with different convolution kernels, padding with different padding strategies, reshaping to meet API call requirements, and so forth.

When performing distributed operations, it is necessary to split computations of nodes within a computation graph. Whether it is model parallelism or data parallelism within operators, essentially, it involves splitting operands of operators. Here, "operator" denotes one node in a computation graph used for executing corresponding computation operations. In actual Intermediate Representation (IR) instruction descriptions, one operator corresponds to at least one IR instruction. In descriptions below, "operator" will primarily be used for explanation (for example, "critical operator" mentioned later), and a person having ordinary skill in the art should understand that "operator" in the program implementing methods of the present disclosure is still represented in the form of IR instructions.

FIG. 4 illustrates examples of several types of splitting for a batch matmul operator. A batch matmul instruction refers to performing multiplication and addition (matmul) operations on a batch of data. In a computation graph, batch matmul corresponds to an instruction in IR form. For example, dot.1 = dot[B, M, N](left_op.2[B, M, K], right_op.3[K, N]), which corresponds to an operator in the computation graph. That is, as shown on the left side of the figure, this batch matmul operator receives an operand with tensor shape [B, M, K] as the left operand and an operand with tensor shape [K, N] as the right operand for inputting, performs multiplication and addition operation to obtain output with tensor shape [B, M, N]. This output with tensor shape [B, M, N] serves as an operand input into subsequent operators.

On the right side of FIG. 4, several possible distributed splitting methods for batch matmul operator operations corresponding to D devices (in the illustrated example, D takes the value of 2, thus the cutting of the corresponding dimension is bisection) are given.

The first row involves splitting the left operand (left op) along dimension 0 (B), which will result in the instruction output also being split along dimension 0 (B), and vice versa. That is, the splitting of the dot (matrix multiplication) output along dimension 0 corresponds to the splitting of the left op along dimension 0.

The situation in the second row is similar to the situation in the first row, corresponding to splitting along dimension 1 (M) of both the left op and the dot output.

The fourth row corresponds to splitting along the last dimension (N) of both the right operand (right op) and the dot output.

The situation in the third row is more special, involving splitting at the merged dimension (K) for both left op and right op during matrix multiplication, while the output produced by dot is a complete numerical value of size [B, M, N], and a partial sum, requiring accumulation of dot results from D devices to obtain the correct dot result.

It should be understood that for the sake of clarity in illustration, not every dimension of operands is shown in the figure. For example, an operand with tensor shape [B, M, K] should correspond to a three-dimensional cuboid as shown in FIG. 3, rather than a two-dimensional rectangle as shown in FIG. 4. Therefore, the splitting of the left operand (left op) along dimension 0 (B) in the first row of FIG. 4 can be seen as slicing a three-dimensional cuboid along the height direction.

Apart from the dot (matrix multiplication) instruction having such input-output correspondence, other instructions within the IR set further have respective corresponding input-output relationships of the other instructions. When optimizing the distributed execution of the deep learning task, determining which splitting method among those illustrated in FIG. 4 for the batch matmul IR instruction, combined with appropriate splitting methods for other instructions, leads to efficient execution of the deep learning task (for example, under given hardware computing resources, optimized splitting solutions can complete the deep learning task faster) constitutes the technical problem to be solved by the embodiments of the present disclosure.

Different from the related art relying on specialized personnel for manually tuning based on experience, the optimization method provided by the embodiments of the present disclosure models the distributed model parallel optimization technical means as a whole for solving according to different optimization levels. Moreover, this method combines with runtime environment and compilation joint optimization technical means to meet various needs under different scenarios, automatically generating exclusive optimization solutions for each model, thereby improving the execution efficiency of individual tasks, and enhancing the overall equipment utilization rate of the platform.

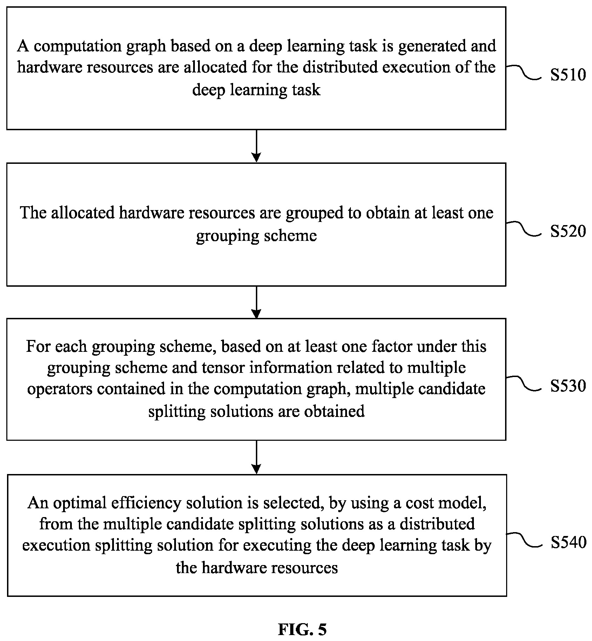

The generation of the distributed partitioning scheme (which can also be referred to as the distributed partitioning strategy) is especially important. FIG. 5 illustrates a schematic flowchart of an optimization method for distributed execution of a deep learning task according to some embodiments of the present disclosure. This method is particularly executed by a master node used for generating distributed execution schemes on a deep learning task execution platform. It should also be clearly noted that this method can specifically be an optimization scheme for distributed execution targeting High-Level Optimized Intermediate Representation (HLO IR) instructions, i.e., not an optimization targeted at each specific execution hardware during the program compilation phase, but rather an optimization performed from the perspective of task description and allocation of the deep learning task.

In some embodiments, the optimization method provided by the present disclosure can be viewed as a method that, given the deep learning task (with known composition of computational graphs and tensor shapes) and the hardware resources for executing such task (i.e., with known allocated hardware devices), automatically generates an optimized distributed execution plan for the current task on the allocated resources. The optimized distributed execution plan obtained through the optimization method provided by the embodiments of the present disclosure should enable the fastest execution of the current task on the allocated resources (including reasonable operator partitioning and computational graph segmentation), and such fastest execution is required to take into account the degree of parallelism and communication overhead during actual computation, and consider the impact of bubbles when involving pipeline execution.

In step S510, a computation graph based on a deep learning task is generated and hardware resources are allocated for the distributed execution of the deep learning task. Here, a deep learning task execution platform receives the deep learning task uploaded by a user. The deep learning task is a training task for a specific model. In some cases, the deep learning task is further an optimization or inference task for a trained model. In some embodiments, the deep learning task execution platform acquires deep learning model code or descriptions uploaded by the user and converts the deep learning model code or descriptions into the computation graph of a specific format, for example, TensorFlow format computation graph or other forms of computation graphs. Regardless of the type of computation graph, relationships between data and computations are represented through nodes and edges.

In some embodiments of the present disclosure, the computation graph has instructions in the form of High-Level Optimization Intermediate Representation (HLO IR). Intermediate Representation (IR) is commonly used in computer compilation technology, referring to a class of instruction descriptions at an intermediate state that do not include device attributes during the process of generating binary instructions executable directly by specific devices from high-level language code. Deep learning frameworks typically describe the data and computation flow of models in directed graph form, which are highly abstract and carry more application attributes. Here, HLO technology refers to utilizing characteristics related to higher-level computation descriptions for optimization, providing general optimization effects that do not rely on low-level hardware. That is, HLO IR is not IR for hardware compilers but is instead a higher abstraction level IR used when generating distribution strategies to various hardware devices.

Allocating hardware resources for the distributed execution of deep learning tasks includes assigning multiple hardware nodes as allocated hardware resources for the deep learning task, where each hardware node includes multiple hardware devices. In other words, the distributed segmentation solution in some embodiments of the present disclosure is required to be determined based on the number of allocated hardware devices. For example, allocating 2 nodes for the current deep learning task, with each node including 8 hardware devices (for instance, 8 GPU cards), thus providing allocation for 16 hardware devices. Typically, for ease of calculation and platform management, each node and each hardware device contained in the node are equivalent. That is, each node has identical hardware device configurations, and the computing power of each hardware device is essentially the same.

After that, in step S520, the allocated hardware resources are grouped to obtain at least one grouping scheme, each grouping scheme including at least one factor obtained by factorizing the number of devices in the hardware resources. Here, performing grouping involves factoring the given number of hardware devices into integers, thereby obtaining grouping schemes where each group includes an identical number of hardware devices. For example, in the aforementioned example where allocated hardware resources consist of 2 nodes with 8 hardware devices per node totaling 16 hardware devices, possible groupings includes 2*8, 4*4, and 8*2 or even 16*1. Here, since factoring the number of hardware devices (one integer) is involved, it is considered as integer decomposition of the number of hardware devices.

In the case of 16*1, namely, a grouping scheme that includes one factor (here, not considering 1 as a factor), the value of this factor corresponds to the number of hardware resource devices (for example, when the number of hardware devices is 16, grouping scheme 1 includes one factor with a value of 16). In other cases, grouping schemes include multiple factors, where the product of values taken by these multiple factors corresponds to the number of hardware resource devices (for example, when the number of hardware devices is 16, grouping scheme 2 includes two factors with values of 2 and 8 respectively; grouping scheme 3 includes two factors with values of 4 and 4 respectively). In certain embodiments of the present disclosure, the integer decomposition of three factors or even more factors is further performed, especially in embodiments involving pipeline parallelism as will be detailed below (i.e., including computation graph partitioning scenarios). At this time, when the number of hardware devices is 16, grouping scheme 4 includes three factors with values of 2, 4, and 2 respectively.

It should be understood that since operator segmentation is superimposed and computation graph partitioning occurs before or after operator segmentation, in certain embodiments related to the computation graph partitioning, for example, first a two-way segmentation followed by an eight-way segmentation or first an eight-way segmentation followed by a two-way segmentation are not considered the same grouping scheme, i.e., grouping schemes composed of identical factors are divided based on the sequence of factors; whereas in other embodiments, there exist situations where it is unnecessary to distinguish the order of factors.

After obtaining the grouping information, in step S530, for each grouping scheme, based on at least one factor under this grouping scheme and tensor information related to multiple operators contained in the computation graph, multiple candidate splitting solutions are obtained, where the multiple candidate splitting solutions are acquired by using the value of at least one factor under this grouping scheme as a splitting value to perform splitting on tensors related to the multiple operators in different dimensions. Here, the grouping scheme includes factors obtained from the aforementioned integer decomposition. For example, in a grouping scheme of 16 hardware computing devices divided into 2*8, one can use the value 2 of one factor as a segmentation value to perform segmentation on operators within the computation graph. Tensors related to an operator include operands input into the operator (referred to herein as "input tensors"), or include computational results output by the operator (referred to herein as "output tensors"), or include both input tensors and output tensors.

Thus, the segmentation is performed on at least one dimensions of tensor related to each operator or not performed at all. Tensors related to an operator include input tensors (i.e., operands), output tensors, or both input and output tensors. In some embodiment, the segmentation of operands are considered, aligning the segmentation strategy of output results with that of operands (i.e., the segmentation of output results does not introduce additional communication overhead), where multiple candidate solutions involve segmentation of input tensors (i.e., operands). In other embodiments, the segmentation of input tensors can also be decided based on the segmentation of output tensors.

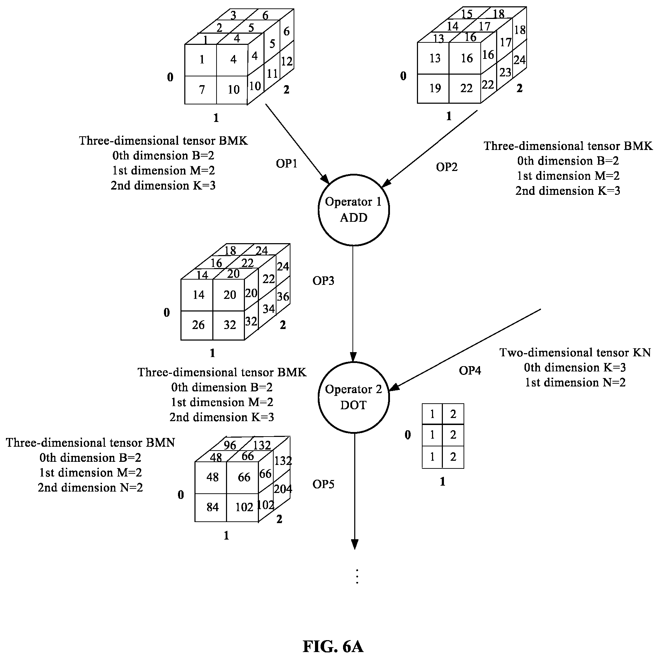

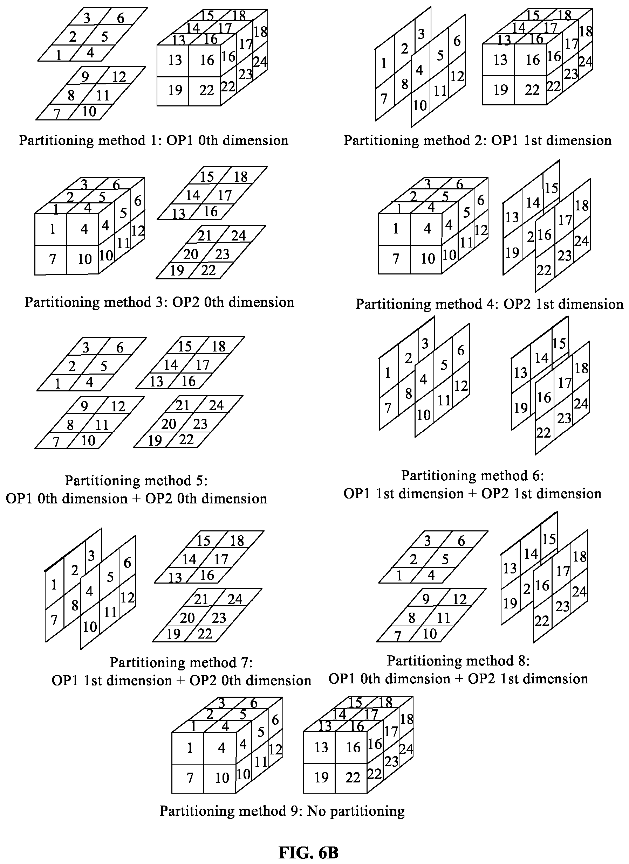

The segmentation is an even segmentation based on the segmentation value, while no segmentation corresponds to NULL (i.e., a "null" operation). When the dimension to be segmented cannot be evenly divided by the segmentation value, for example, in the case of OP1~OP3 in FIG. 6A where K=3 in the second dimension cannot be evenly divided by the segmentation value 2, padding operations can be performed on the corresponding dimension values before even division, or the dimension that cannot be evenly divided will not undergo segmentation. For instance, for the example in FIG. 6A, padding can be applied to make K=4, thereby allowing for even division of this dimension; or as shown in the example of FIG. 6B, segmentation is not performed on dimensions that cannot be evenly divided.

In the example of FIG. 4, any one of the three dimensions [B, M, K] of the left operand can undergo two-way segmentation, any one of the two dimensions [K, N] of the right operand can undergo two-way segmentation, any one of the three dimensions [B, M, N] of the output result can undergo two-way segmentation, or simultaneously any two or all of the dimensions of the left operand, right operand, and output result can undergo two-way segmentation, or alternatively, no segmentation is performed on the left operand, right operand, and output result. In different embodiments of the present disclosure, the segmentation method of output results can be determined based on the segmentation method of operands, or conversely, the segmentation method of operands can be determined based on the segmentation method of output results. Considering the left and right operands, the example of FIG. 4 can include twelve segmentation methods. However, some of these segmentation methods do not conform to the computational logic of the operator and thus can be eliminated before screening using a cost model. In certain cases, segmentation of the output dot can be directly restricted to correspond to inputs, thereby not introducing new segmentation methods for the operator. In other cases, free segmentation of output tensors that does not correspond to input tensors can be performed, further introducing degrees of freedom in segmentation.

When the computation graph includes multiple operators with operand inputs and outputs, the aforementioned segmentation can be performed on at least one tensor related to each operator. Thus, when each operator in an entire computation graph undergoes a first segmentation based on the number of groups, the number of candidate segmentation solutions obtained through free combination can be the product of segmentation permutations corresponding to each operator.

In some embodiments, in a first segmentation solution based on one factor, it is assumed that hardware devices within each group execute identical computations. This solution clearly does not fully utilize the role of each hardware device. Thus, an operation for each grouping scheme, based on the at least one factor under this grouping scheme and the tensor information related to the multiple operators contained in the computation graph, obtaining the multiple candidate splitting solutions includes that following steps. In response to the current grouping scheme containing the multiple factors, the value of one factor among the multiple factors is used as a first splitting value to perform one-dimensional splitting on tensors (such as operands) related to the multiple operators of the computation graph. On the basis of one-dimensional splitting, the value of another factor other than a factor used as the first splitting value among the multiple factors is used as a second splitting value to perform two-dimensional splitting on tensors (such as operands) related to the multiple operators of the computation graph. The multiple candidate splitting solutions are obtained by permutation and combination of the two-dimensional splitting of the multiple operators.

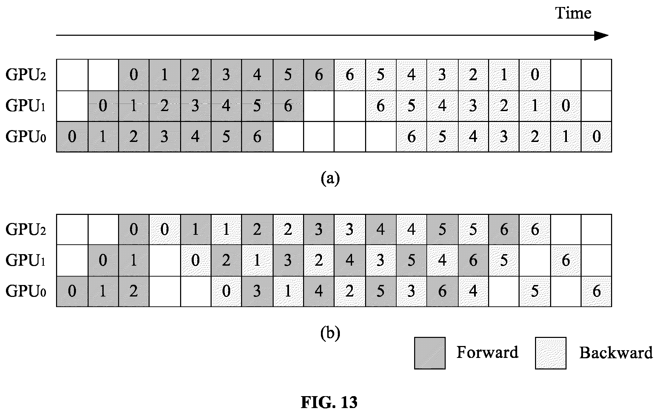

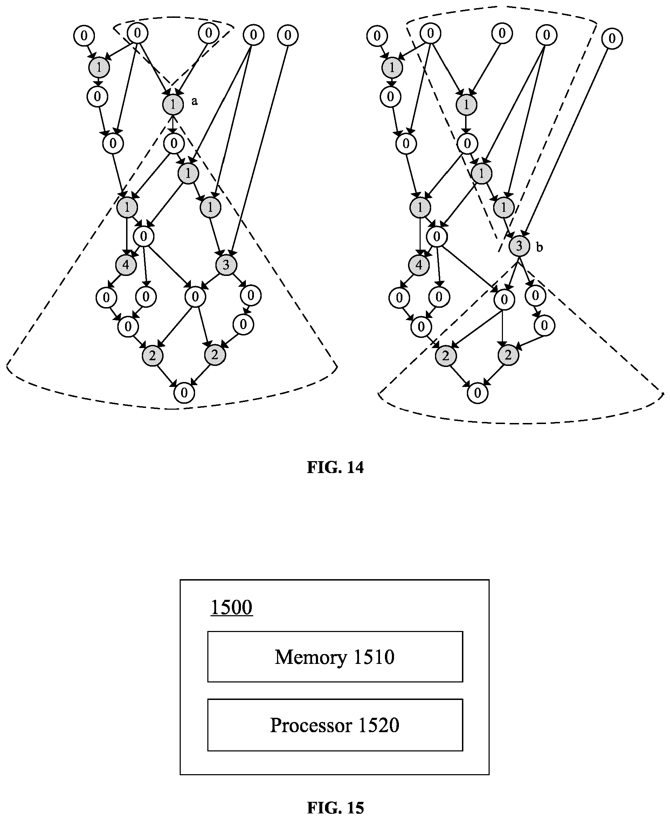

For example, after performing twelve types of two-way segmentation solutions (corresponding to a first segmentation) on the operator shown in FIG. 4 as described above, eight-way segmentation (corresponding to a secondary segmentation) is further performed on each of these two-way segmentation solutions. At this point, after secondary segmentation, the operator includes, for example, 12*12 totaling 144 segmentation methods. In certain embodiments, integer decomposition based on hardware devices includes three factors, or even four factors. At this time, tensors related to operators undergo tertiary or even quaternary segmentation. In some embodiments of the present disclosure, the computation graph initially undergo one segmentation to obtain multiple staged sub-graphs, followed by segmentation of operators within staged sub-graphs (at this point, a first segmentation of an operator corresponds to a secondary segmentation of the entire current deep learning task, and a secondary segmentation of an operator corresponds to a tertiary segmentation of the entire current deep learning task). Segmentation of the computation graph will be described below in conjunction with FIG. 13 and FIG. 14. In other embodiments, computation graph partitioning further occurs after operator segmentation or between two operator segmentations.

For example, after performing secondary partitioning for operators and freely combining partitions for each operator, multiple candidate partition solutions are obtained. When no restrictions are placed on the partitioning of each operator, that is, when each operator is freely partitioned, a vast number of candidate partition solutions are obtained. Although the candidate partition solutions at this time practically include the optimal partition solution, the excessive number of candidate solutions increases the computational effort required to select the optimal solution from the candidate partition solutions. Therefore, in some embodiments of the present disclosure, an operation of obtaining the multiple candidate partition solutions by using values of at least one factor under this grouping scheme as partition values to perform partitioning on tensors related to the multiple operators includes the following steps. For each operator, a preset optimization strategy is adopted to perform partitioning along a preset dimension of the tensor of the operator to obtain a set of partition permutations. Partition permutations of each operator in the computation graph are aggregated to obtain partition permutation combinations under this grouping scheme, and these partition permutation combinations are taken as the multiple candidate partition solutions.

Herein, the preset optimization strategy includes partitioning at least one of the tensors associated with the operator along any dimension, or not partitioning the tensor of the operator at all. At this point, the degree of freedom in partitioning is maximal, which certainly includes the truly optimal partition solution, but the cost of obtaining the optimal partition solution is too high. Therefore, in some embodiments, partitioning at least one of the tensors associated with the operator along any dimension is logical partitioning. For instance, a division method 8 and a division method 9 in the example shown in FIG. 6B are illogical divisions under this division method that cannot obtain calculation results, hence the division method 8 and the division method 9 are directly excluded from the division methods for that operator (which also reduces the division permutations of that operator). Herein, logical partitioning is logical partitioning for the operator, or the logical partitioning is a partitioning solution logically derivable considering the influence of upstream and downstream instructions corresponding to the instructions of the operator.

In other embodiments, the preset optimization strategy prunes the partitioning space to control the number of candidate solutions within a reasonable range. In some embodiments, the preset optimization strategy includes strategy A), that is, dividing the computation graph into multiple optimized sub-graphs, where each optimized sub-graph includes at least one operator. For tensors of various operators within each optimized sub-graph, partition strategies of various operators are aligned, i.e., partitioning in a manner that does not incur communication overhead within that optimized sub-graph. Here, optimization sub-graph division is performed based on criteria such as branches where computation graph operators reside.

In some embodiments, the preset optimization strategy includes strategy B), that is, identifying at least one critical operator and performing partitioning along any dimension of the tensor of the critical operator. For other operators within a predetermined adjacent range of the key operator, partitioning is performed in a way that does not incur communication overhead within that predetermined adjacent range. Typically, critical operators correspond to operators involving large amounts of computation, such as multiply-add operators.

In some other embodiments, the preset optimization strategy includes strategy C) screening out rules matching the current computation graph and/or tensor from a preset rule library, and performing partitioning of associated operators in the current computation graph based on matched rules. The preset rule library includes heuristics rules that can be extended and added.

The following will describe the partitioning of operators and the preset optimization strategies with specific examples illustrated in FIG. 6A-FIG. 6F. FIG. 6A-FIG. 6F show examples of different partitioning of operators in the computation graph.

FIG. 6A illustrates an example of two operators contained in the computation graph and operations performed on tensors related to the two operators. FIG. 6A shows two operators related to the computation graph, an operator 1 (ADD) involves multi-dimensional matrix addition, an operator 2 (DOT) involves multi-dimensional matrix multi-plication. The operator 1 and the operator 2 involve five tensors (corresponding to operands OP1~OP5 in the figure), where compositions of various tensors are visually depicted. Three-rank tensors are represented as cuboids, two-rank tensors are represented as rectangles, small cubes or numbers in small squares indicate specific values, and italicized numbers annotate corresponding dimensions of tensors.

The operator 1 includes two operands (i.e., input tensors) OP1 and OP2. Since matrix addition is required, the shapes of tensors OP1 and OP2 are identical, both being three-rank tensors including dimensions BMK, with dimension 0 B=2, dimension 1 M=2, and dimension 2 K=3.

In matrix addition operations, values at the same positions are directly added together. Thus, after performing 12 addition operations, the operator 1 calculates an output result whose tensor shape matches the tensor shape of OP1 and OP2. Since the output tensor of the operator 1 is required to be fed into the operator 2 for processing, the output tensor of the operator 1 corresponds to one of the input tensors of the operator 2, i.e., operand OP3. Clearly, the tensor shape of operand OP3 matches the tensor shapes of OP1 and OP2, all being three-rank tensors including dimensions BMK, with dimension 0 B=2, dimension 1 M=2 and dimension 2 K=3.

The operator 2 includes two operands (i.e., input tensors) OP3 and OP4. The operand OP3 is the result of matrix addition by the operator 1, thus the tensor shape of the operand OP3 matches the tensor shapes of OP1 and OP2, all being three-rank tensors including dimensions BMK, with dimension 0 B=2, dimension 1 M=2 and dimension 2 K=3. The operand OP4 is required to perform matrix multi-plication with the operand OP3, thus for the operand OP4, dimension 0 should match dimension 2 of the operand OP3, i.e., dimension 0 K=3. In the example of FIG. 6A, the operand OP4 further includes dimension 1 N=2. Hence, the matrix multi-plication of OP3 and OP4 can be expressed as:

$$\begin{bmatrix} 14 & 16 & 18 \\ 20 & 22 & 24 \end{bmatrix} \times \begin{bmatrix} 1 & 2 \\ 1 & 2 \\ 1 & 2 \end{bmatrix} = \begin{bmatrix} 48 & 96 \\ 66 & 132 \end{bmatrix}$$

$$\begin{bmatrix} 26 & 28 & 30 \\ 32 & 34 & 36 \end{bmatrix} \times \begin{bmatrix} 1 & 2 \\ 1 & 2 \\ 1 & 2 \end{bmatrix} = \begin{bmatrix} 84 & 168 \\ 102 & 204 \end{bmatrix}$$

That is, it can be seen as the matrix multi-plication of the first layer of dimension 0 of OP3 with OP4, resulting in a 2x2 matrix result serving as the output result of the operator 2 (shown in the figure as OP5, which can serve as an operand for the next operator) on the first layer of dimension 0, while simultaneously the matrix multiplication of the second layer of dimension 0 of OP3 with OP4 results in a 2x2 matrix result serving as the second layer of dimension 0 of the output result of Operator 2. These two layers are concatenated to obtain a three-rank tensor OP5 including dimensions BMN, where dimension 0 B=2, dimension 1 M=2 and dimension 2 N=2.

As previously mentioned, in order to obtain candidate partition solutions for the computation graph, partitioning of operators is required. This partitioning can be performed on at least one of the dimensions of tensors related to each operator (for example, input tensors; or output tensors; or input tensors and output tensors), or no partitioning is performed.

FIG. 6B illustrates partitioning methods applied to operands (i.e., input tensors) OP1 and OP2 associated with operators. In the partitioning shown in FIG. 6B, the partitioning value D=2. Here, in order to avoid complicating details that obscure the main point of the present disclosure, consideration of partitioning along dimension 2, which cannot be evenly divided by 2, is omitted.

Simultaneously, partitioning of operands (i.e., input tensors) is considered (that is, by default, partitioning of output results aligns with partitioning of operands if possible). However, it should be understood that in other embodiments, padding operations can be used for padding the second dimension to 4 and consider partitioning the second dimension, and different partitioning of output tensors can also be considered simultaneously.

Since OP1 includes three scenarios: partitioning dimension 0, partitioning dimension 1, and not performing partitioning, and OP2 similarly includes three scenarios: partitioning dimension 0, partitioning dimension 1, and not performing partitioning, the partitioning methods are combinations of these three partitioning methods for OP1 and OP2, totaling 3 × 3=9 methods, i.e., partitioning methods 1~9 illustrated.

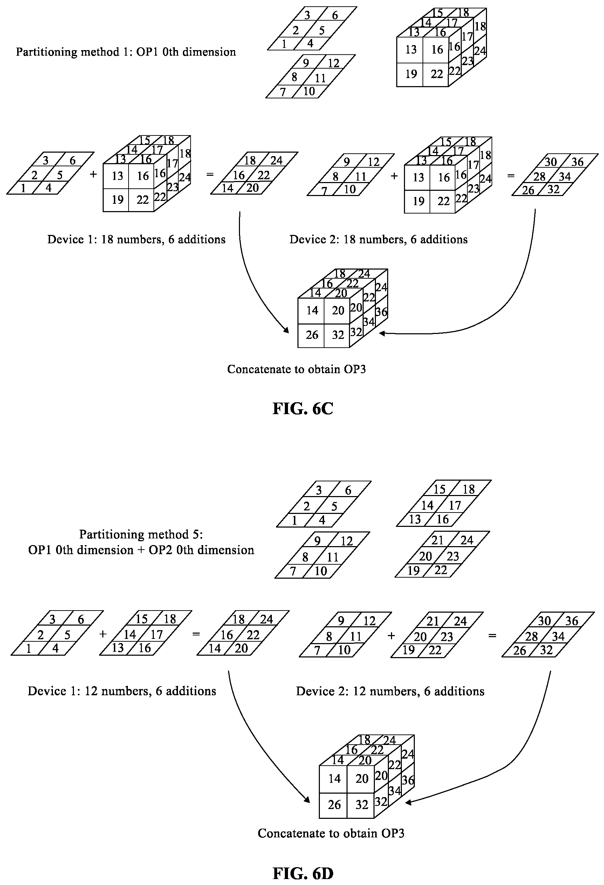

When the partitioning value D corresponds to allocating two hardware devices for executing this computation graph (or operators 1 and 2 of this computation graph), different divisions as above will lead to different computational and communication overheads for these two devices (it should be understood that in more complex examples, the partitioning value D=2 can also correspond to allocating two groups of hardware devices, where each group includes at least two hardware devices). FIG. 6C-FIG. 6F provide operations required by a hardware device 1 and a hardware device 2 during the execution of the operator 1 under different partitioning methods.

FIG. 6C illustrates operations required by the hardware device 1 and the hardware device 2 under partitioning method 1. The partitioning method 1 corresponds to a two-way partitioning of dimension 0 of OP1, without partitioning OP2, thus the hardware device 1 receives data from the first layer of dimension 0 of OP1 corresponding to six numbers and all 12 numbers from OP2, and performs addition operations on the first layer of dimension 0 of OP1 and OP2, thereby obtaining data corresponding to six numbers from the first layer of dimension 0 of OP3. Similarly, the hardware device 2 receives data from the second layer of dimension 0 of OP1 corresponding to six numbers and all 12 numbers from OP2, and performs addition operations on the second layer of dimension 0 of OP1 and OP2, thereby obtaining data corresponding to six numbers from the second layer of dimension 0 of OP3. Thus, under the partitioning method 1, both devices are required to acquire 18 pieces of data and perform six additions, and respective computation results of the two hardware devices are concatenated to obtain OP3.

Clearly, in the example of FIG. 6C, data of the six numbers from the second layer of dimension 0 of OP2 are useless for the hardware device 1, and data of the six numbers from the first layer of dimension 0 of OP2 are useless for the hardware device 2. Therefore, for the calculation of the operator 1 alone, the partitioning method 1 introduces unnecessary data transmission and storage, which does not correspond to optimal efficiency.

Therefore, FIG. 6D illustrates operations required by the hardware device 1 and the hardware device 2 under partitioning method 5. The partitioning method 5 corresponds to a two-way partitioning of dimension 0 for both OP1 and OP2, thus the hardware device 1 acquires data from the first layer of dimension 0 of OP1 corresponding to six numbers and from the first layer of dimension 0 of OP2 corresponding to six numbers, and obtains data corresponding to six numbers from the first layer of dimension 0 of OP3 through performing addition operations on the first layer of dimension 0 of OP1 and OP2. Similarly, the hardware device 2 acquires data from the second layer of dimension 0 of OP1 corresponding to six numbers and from the second layer of dimension 0 of OP2 corresponding to six numbers, and obtains data corresponding to six numbers from the second layer of dimension 0 of OP3 through performing addition operations on the second layer of dimension 0 of OP1 and OP2. Under the partitioning method 5, both devices acquire 12 pieces of data and perform six additions, and respective computation results of the two hardware devices are concatenated to obtain OP3.

In the example of FIG. 6D, for the calculation of the operator 1 alone, the partitioning method 5 does not introduce unnecessary data transmission and storage, and computational and communication efficiency of the partitioning method 5 is higher than computational and communication efficiency of the partitioning method 1 as mentioned above.

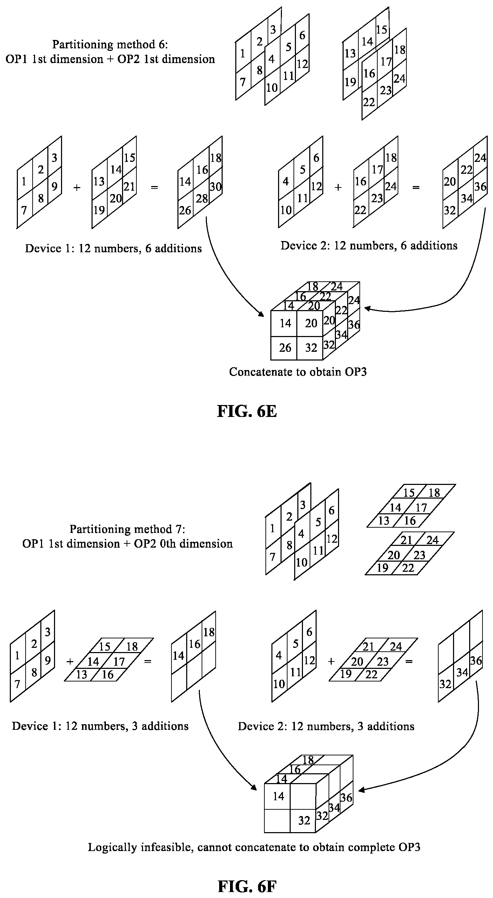

FIG. 6E illustrates operations required by the hardware device 1 and the hardware device 2 under partitioning method 6. Similar to the partitioning method 5, the partitioning method 6 performs a two-way partitioning on the same dimension (dimension 1) for OP1 and OP2, thus the hardware device 1 and the hardware device 2 further acquire 12 pieces of data and perform six additions each. Respective computation results of the two hardware devices are concatenated to obtain OP3, with the difference lying in that the hardware device 1 and the hardware device 2 obtain data corresponding to six numbers from the first layer and second layer of dimension 1 of OP3 respectively. Therefore, for the calculation of the operator 1 alone, the partitioning method 6 does not introduce unnecessary data transmission and storage, and computational and communication efficiency of the partitioning method 6 is higher than computational and communication efficiency of the partitioning method 1 as mentioned above, and the efficiency of partitioning method 6 is identical to the efficiency of partitioning method 5.

FIG. 6F illustrates operations required by the hardware device 1 and the hardware device 2 under partitioning method 7. The partitioning method 7 performs a two-way partitioning on different dimensions for OP1 and OP2 (OP1 partitions dimension 1, OP2 partitions dimension 0), thus although the hardware device 1 and the hardware device 2 further acquires 12 pieces of data each, the hardware device 1 and the hardware device 2 perform three additions, and respective computation results of the two hardware devices cannot be concatenated to obtain a complete OP3. Therefore, for the calculation of the operator 1 alone, although the partitioning method 7 has high communication efficiency, the partitioning method 7 cannot directly obtain OP3. To address this, in some embodiments of the present disclosure, for the partitioning of each operator, logical partitioning of tensors related to the operator can be performed, for example, the partitioning method 7 and the partitioning method 8 are excluded due to the inability of the partitioning method 7 and the partitioning method 8 to directly obtain OP3.

As shown in FIG. 6D and FIG. 6E, when considering the calculation of the operator 1, the partitioning method 5 and the partitioning method 6 achieve optimal efficiency among the nine partitioning methods mentioned above. At this point, consideration is given to the situation involving matrix multi-plication with the operator 2. As previously stated, the matrix multi-plication of OP3 and OP4 can be represented as:

$$
\begin{bmatrix} 14 & 16 & 18 \\ 20 & 22 & 24 \end{bmatrix} \times \begin{bmatrix} 1 & 2 \\ 1 & 2 \\ 1 & 2 \end{bmatrix} = \begin{bmatrix} 48 & 96 \\ 66 & 132 \end{bmatrix}
$$

$$
\begin{bmatrix} 26 & 28 & 30 \\ 32 & 34 & 36 \end{bmatrix} \times \begin{bmatrix} 1 & 2 \\ 1 & 2 \\ 1 & 2 \end{bmatrix} = \begin{bmatrix} 84 & 168 \\ 102 & 204 \end{bmatrix}
$$

That is, it can be seen as the matrix multi-plication of the first layer of dimension 0 of OP3 with OP4, and simultaneously the matrix multi-plication of the second layer of dimension 0 of OP3 with OP4. Each resulting 2x2 matrix result serves as the first layer and second layer of dimension 0 of OP5 respectively, and these two layers are directly concatenated to obtain the tensor OP5.

In order to smoothly obtain OP5, the partitioning method of the operator 2 is restricted to a two-way partitioning along dimension 0 of OP3 without partitioning OP4. At this time, the hardware device 1 performs the aforementioned matrix multi-plication operation on the first row, and the hardware device 2 performs the aforementioned matrix multi-plication operation on the second row. That is, the hardware device 1 acquires 12 pieces of data, performs 12 multiplications and 4 additions to obtain data for 4 numbers from the first layer of dimension 0 of OP5, and the hardware device 2 acquires 12 pieces of data, performs 12 multiplications and 4 additions to obtain data for 4 numbers from the second layer of dimension 0 of OP5.

When performing the above partitioning on the operator 2, if the hardware device 1 and the hardware device 2 perform operations corresponding to the partitioning method 5 on the operator 1, the hardware device 1 and the hardware device 2 can directly utilize the results obtained from the operator 1 operations which are the first and second layers of dimension 0 of OP3, and then each acquire 6 pieces of data from OP4 to proceed. If the hardware device 1 and the hardware device 2 perform operations corresponding to the partitioning method 6 on the operator 1, the hardware device 1 and the hardware device 2 acquire computation results of each other, concatenate the computation results into a complete OP3, and then perform partitioning along dimension 0. In other words, after considering the partitioning of the operator 2, the partitioning method 5 of the operator 1 is superior to the partitioning method 6.

As described above in conjunction with FIG. 6A-FIG. 6F, examples of different communication and computational overheads caused by different partitioning methods of operators have been illustrated. Although in some embodiments, any dimension of tensors related to each operator can be partitioned (thereby ensuring that the truly optimal efficiency solution is covered in candidate solutions), many partitioning methods are actually inefficient and cannot lead to the optimal partitioning solution. Such methods can be pruned according to preset optimization strategies. For example, strategy C) corresponds to screening out rules matching the current computation graph and/or tensor from a preset rule library and performing partitioning of associated operators in the current computation graph based on matched rules. The preset rule library includes heuristics rules that can be extended and added. For instance, one heuristic rule restricts the partitioning method of multi-dimensional matrix multiplication operators, i.e., limiting to partitioning along dimension 0 of the computation result obtained from the preceding operator. Since the operator 2 in FIG. 6A matches this heuristic rule, partitioning along dimension 0 of OP3 of the operator 2 is performed, thereby reducing the number of partitioning methods for the operator 2, thus lowering the search computational load for the overall optimal efficiency solution for the computation graph.

Similarly, strategy A) corresponds to dividing the computation graph into multiple optimized sub-graphs, where each optimized sub-graph includes at least one operator. For tensors of various operators within each optimized sub-graph, a partitioning method that does not incur communication overhead is adopted within this optimized sub-graph. Also taking FIG. 6A as an example, if the operator 1 and the operator 2 are located within the same optimized sub-graph and according to heuristic rules, partitioning along dimension 0 of OP3 of the operator 2 is required. Since the partitioning method of the operator 1 is required to align with the partitioning method of the operator 2, the partitioning method 5 shown in FIG. 6B can be directly adopted as the partitioning permutation combination of the operator 1 (at this point, the partitioning permutation combination of the operator 1 includes one method), thereby further reducing the number of candidate solutions and lowering the search computational load for the optimal solution.

For strategy B), also taking FIG. 6A as an example, since the operator 2 involves multi-dimensional matrix multiplication, i.e., involving multiply-add operations, the operator 2 is regarded as a critical operator. The partitioning of the operator 1 within the neighborhood of the operator 2 is further required to align with the operator 2.

In practical use, different optimization levels are used for selecting optimization strategies. For example, for relatively small-scale deep learning tasks, strategy C) is used, thereby avoiding some unnecessary partitioning methods through the matching of existing rules. For certain large-scale or even ultra-large-scale deep learning tasks, due to the enormous number of operators, additional strategies such as strategy B) or even strategy A) is applied, thereby restricting the search space of distributed execution solutions to a time-controllable range.

Additionally, it should be understood that although for the sake of clarity in FIG. 6A-FIG. 6F, examples with dimensions values of B=2, M=2, K=3, N=2 are given. In actual operations, operands and computation results corresponding to the operands usually have much larger dimensions. Moreover, although in the examples of matrix multiplication in FIG. 4 and FIG. 6A, an operand with tensor shape [B, M, K] multiplying with an operand with tensor shape [K, N] (in this case, the matrix multiplication operation involves B [M, K] matrices each multiplied with a single [K, N]) is shown. In actual operations, an operand with tensor shape [B, M, K] can multiply with an operand with tensor shape [B, K, N] (in this case, the matrix multiplication operation involves B [M, K] matrices respectively multiplied with B [K, N]). In other words, the operator operations related to actual operations are usually much more complex than the example in FIG. 6A.

To avoid memory exhaustion on hardware devices during the execution of deep learning tasks, restrictions are placed on operator segmentation according to the occupancy of memory space (in the case of using the GPU for computation, memory corresponds to the video memory of the GPU), thereby preventing memory exhaustion while simultaneously limiting the search space for optimization strategies. At this time, an operation of for each grouping scheme, based on the at least one factor under this grouping scheme and the tensor information related to the multiple operators contained in the computation graph, obtaining the multiple candidate splitting solutions includes the following steps. Total storage space size of training parameter input tensors related to the multiple operators is counted. In response to the total storage space size exceeding a predetermined threshold, at least one training parameter input tensors for splitting is selected to obtain the multiple candidate splitting solutions. Here, regardless of which grouping scheme, the occupancy of memory space is required to be considered. Training parameter input tensors are trainable variables of the model (i.e., model weight parameters). When operators perform specific operations, the operators usually involve computations between input data tensors (i.e., feature values) and training parameter tensors (model weights). In some embodiments of the present disclosure, the total storage space occupied by training parameter tensors is pre-calculated. In response to this space exceeding a predetermined threshold, for example, 70% of the memory of a single GPU, some training parameter tensors are selected as segmentation candidates to ensure that each GPU card can store respective shards of data.

After obtaining the multiple candidate splitting solutions, in step S540, an optimal efficiency solution is selected, by using a cost model, from the multiple candidate splitting solutions as a distributed execution splitting solution, where the distributed execution splitting solution is used for executing the deep learning task by the hardware resources. Here, the cost model evaluates the cost of each segmentation solution in computation and communication, thereby identifying a candidate segmentation solution with the most efficient as the distributed execution segmentation solution.

As previously mentioned, for multiple operators, a high-level optimization intermediate representation (HLO IR) is used for description, while for segmentation solutions of each operator, split state description information specific to each HLO IR is utilized. In other words, for each IR instruction, the split state description information (distribution specification, dist_spec) is appended to indicate a certain split strategy for executing output of the instruction. The recorded information includes "split on which dimension", "split into how many parts", "granularity of split assembly", and "whether it is a full shape but partial results are required to be accumulated (corresponding to partial cases)". When other special circumstances arise, these strategies can be extended. For the description of this split strategy, generalization can be applied without explicitly distinguishing whether the description of this split strategy belongs to "data parallelism" or "model parallelism". It is envisaged that when all computation instructions in the IR are split along the 0th dimension, and all parameters undergo no splitting, then gradients ultimately exist in a partial state, which corresponds to data parallelism. The DistHLO IR of the entire computation graph is obtained by appending different dist_specs to all original HLO IR instructions under the constraints of known execution resources (computing devices + network), resulting in a comprehensive distributed execution strategy for the entire graph. These execution strategies are candidate strategies that can be screened based on the cost model. In some embodiments, the cost model enumerates the split methods for each operator while providing constraint conditions, thus solving for the minimum cost value under these constraint conditions. The segmentation methods of various operators corresponding to this minimum cost value are combined to obtain the final distributed segmentation strategy. In some embodiments, an operation of selecting, by using the cost model, the optimal efficiency solution from the multiple candidate splitting solutions as the distributed execution splitting solution includes the following steps. Splitting strategies of each HLO IR into variables are modeled based on the splitting state description information. Constraint conditions between variables are set. The minimum value under the constraint conditions for full graph modeling of each candidate splitting solution is solved based on the cost model. The splitting state description information of each HLO IR corresponding to the minimum value is taken as the distributed execution splitting solution.

As described above, the secondary segmentation method of each operator in the computation graph is determined based on grouping information. Through the arrangement and combination of this segmentation method to evaluate the cost of candidate solutions, an optimized solution is selected for the actual distributed execution of the computation graph. In some embodiments of the present disclosure, since the total number of hardware devices corresponding to allocated hardware resources usually corresponds to multiple grouping schemes, an operation of grouping the allocated hardware resources to obtain at least one grouping scheme includes the following steps. The number of hardware devices is factored into integers to acquire multiple grouping schemes, and the factorization of each grouping scheme is not identical. For example, in the case of allocation to sixteen computing devices, each grouping scheme includes different factor compositions, such as 1*16 (corresponding to a grouping scheme including one factor, and at this time it is not considered that 1 is a factor), 2*8 and 4*4 (corresponding to grouping schemes including two factors), 2*4*2 (corresponding to a grouping scheme including three factors), even 2*2*2*2 (corresponding to a grouping scheme including four factors). Typically, schemes where the number of groups and the number of devices within groups are reversed are not considered, for example, dividing into two groups with eight devices each and dividing into eight groups with two devices each. Since after secondary segmentation, the candidate segmentation solutions corresponding to these two groupings are actually the same. The cost model is used for obtaining respective optimal candidate segmentation solutions for different grouping schemes. Thus, an operation of selecting, by using the cost model, the optimal efficiency solution from the multiple candidate splitting solutions as the distributed execution splitting solution includes the following steps. For each grouping scheme, a first candidate splitting solution with optimal efficiency under this grouping scheme is selected, by using a cost model, to obtain multiple first candidate splitting solutions. A second candidate splitting solution with optimal efficiency is selected from the multiple first candidate splitting solutions, and the second candidate splitting solution is set as the distributed execution splitting solution.

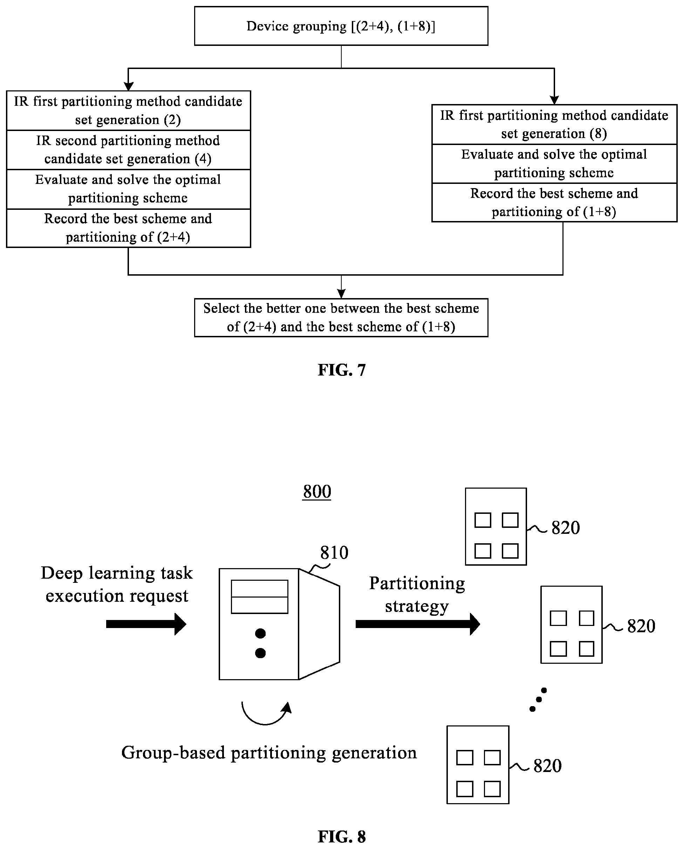

FIG. 7 illustrates examples of acquiring distributed execution segmentation solutions under multiple device grouping schemes. In the case of allocation to eight computing devices, each grouping scheme includes different factors, for example, 2*4 or 1*8. In the case of 2*4, as shown on the left side of FIG. 7, initially a first segmentation solution candidate set under a two-way segmentation is generated (that is, multiple candidate segmentation solutions under one segmentation), followed by generating a second segmentation solution candidate set under a four-way segmentation (that is, multiple candidate segmentation solutions under secondary segmentation). The optimal solution under this grouping scheme is evaluated and solved based on cost model and this optimal solution is recorded (corresponding to a first candidate segmentation solution under the 2*4 grouping). While in the 1*8 grouping, essentially one segmentation occurs (eight-way segmentation). The optimal solution under this grouping scheme is evaluated and solved based on cost model and this optimal solution is recorded (corresponding to the first candidate segmentation solution under the 1*8 grouping). Comparing the optimal solutions within these two grouping schemes to select the one with smaller cost as the second candidate segmentation solution for the final distributed execution segmentation solution.

Since different grouping schemes use the same cost model for screening the first candidate segmentation solutions under respective schemes, when obtaining the first candidate segmentation solution with the highest efficiency under respective schemes, the cost value of this first candidate segmentation solution is further obtained simultaneously. At this time, selection of the second candidate segmentation solution is conducted by comparing the magnitude of cost values of the first candidate segmentation solutions from multiple grouping schemes (that is, selecting the solution with the smallest cost value from multiple first candidate segmentation solutions as the distributed execution segmentation solution).

In some embodiments of the present disclosure, besides performing operator segmentation, pipeline parallelism is further introduced through computation graph partitioning. At this time, based on at least one factor under this grouping scheme and tensor information related to multiple operators contained in the computation graph, obtaining multiple candidate splitting solutions further includes the following steps. The number of groups or the number of devices within the group is used as the splitting value, and the computation graph is split into multiple stage sub-graphs for pipeline parallel execution. The multiple stage sub-graphs are split through evaluating splitting positions of the computation graph to obtain the multiple stage sub-graphs with identical computing time period. An operation of evaluating the splitting positions of the computation graph to obtain the multiple stage sub-graphs with the identical computing time period includes the following steps. Critical operators are selected in the computation graph and total computing overhead of the critical operators are counted. Multiple stage intervals are equally split based on the total computing overhead. Based on computing overhead of each critical operator, computing overhead of the preceding critical operator and computing overhead of the following critical operator, an interval range of this critical operator is set. An optimized solution for minimizing total communication overhead of cross-interval tensors as the splitting position is obtained so that each critical operator falls within the interval range of this critical operator.

The above computation graph partitioning can be combined with the operator division in some embodiments of the present disclosure. For example, initially, grouping numbers serve as partitioning values for computation graph partitioning, and then operator division is performed based on the number of devices within each staged sub-graph (which includes secondary operator division under a three-factor decomposition). Alternatively, the operator division is conducted first, followed by partitioning of the computation graph after the operator division. The pipeline parallel operations related to the computation graph partitioning will be described in detail below in conjunction with FIG. 13 and FIG. 14.

After selecting a distributed execution segmentation solution, task sub-graphs are generated based on the distributed execution segmentation solution and sent to the hardware resources for execution of deep learning tasks. In this context, the generated task sub-graphs are multiple task sub-graphs corresponding to the quantity of hardware devices contained in the hardware resources, and these sub-graphs are sent one by one to the corresponding hardware devices or to execution nodes including specific hardware devices, so that the execution nodes determine the specific execution of the multiple hardware devices contained in the execution nodes.

Embodiments of the present disclosure further provide a distributed system for executing a deep learning task. FIG. 8 illustrates a schematic composition of a distributed system for executing a deep learning task. The system 800 includes a master node 810 and multiple execution nodes 820.

The master node 810 is arranged for executing the optimization method for distributed execution of the deep learning task mentioned above and sending task sub-graphs generated based on the distributed execution splitting solution to the hardware resources for the execution of the deep learning task. The execution node including at least one hardware device as the hardware resources, which is a node including 8 GPU devices shown in the figure, is arranged for executing the deep learning task based on the distributed execution splitting solution.

In some embodiments, the master node 810 is further arranged for, based on the distributed execution splitting solution, generating a Directed Acyclic Graph (DAG) task graph for the hardware resources and determining a task execution order; generating the task sub-graphs containing the task execution order for each execution node; and sending dedicated task sub-graphs to each execution node for execution.

The master node 810 is further arranged for optimizing the allocation of hardware resources at the cluster level, aggregating the current running status of execution nodes and allocating the hardware resources for various deep learning task based on the current running status and the deep learning task.

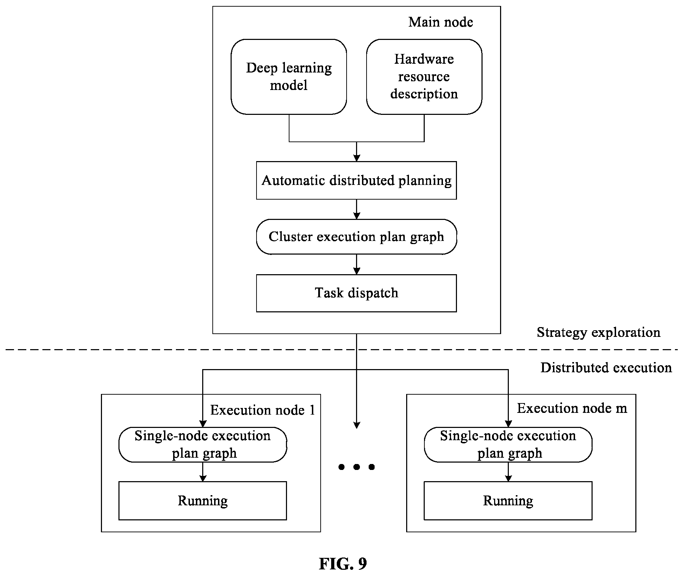

As mentioned above, the primary system architecture design of the present solution is divided into two parts, operating in a 1-to-N Master-Worker pattern. FIG. 9 illustrates a schematic diagram of a distributed system master-worker architecture according to some embodiments of the present disclosure.

The policy exploration part is executed by a Master end (namely a main end), that is, a main node shown in FIG. 8. This part is implemented as a globally unique component. In response to receiving a training task request, the Master end undertakes and drives the main process of the present solution, and drives each Worker end (execution end) to complete the training process through a Remote Procedure Call (RPC) mechanism. The main functions include reception and processing of AI model and hardware resource descriptions, planning decisions for distributed strategies, generation of final distributed execution plans, and distribution of execution tasks.

The distributed execution part is executed by a Worker end. In some embodiments, one Worker end corresponds to one execution node shown in FIG. 7. Therefore, FIG. 9 shows m execution nodes. These m execution nodes are hardware resources allocated for executing current deep learning tasks, and each of these m execution nodes includes multiple hardware devices, such as GPU cards. This component is responsible for driving specific computations on individual computing components (such as nodes), according to the configuration of hardware resources, multiple Workers (such as one per node) will be started across the system, globally multiple logically equivalent clients will be started. Each client receives RPC execution requests from the Master end, completes just-in-time compilation (and caching) and execution of issued tasks on local computing components. All Workers together globally complete one full iteration of the distributed training process.

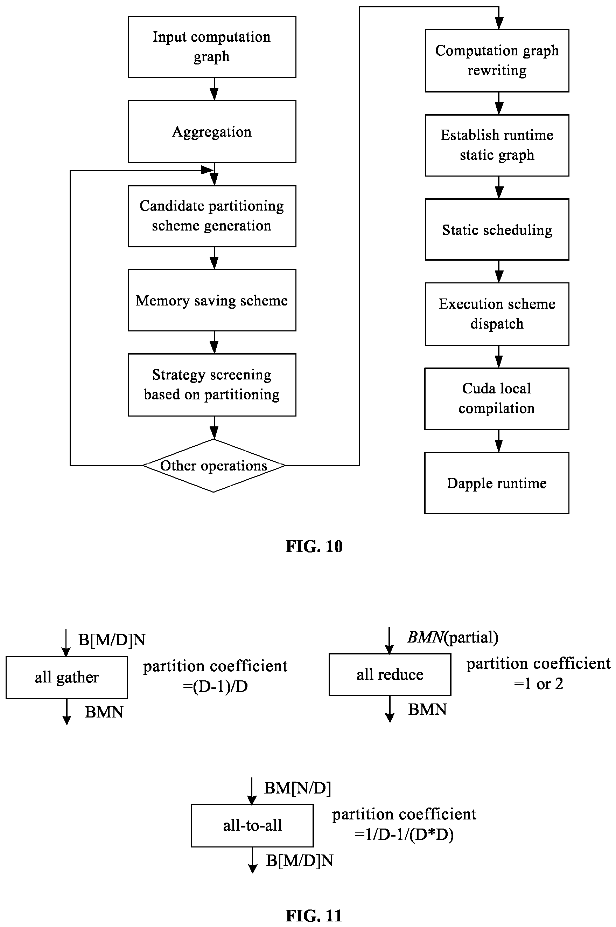

The main execution flow of the solution includes: (1) model and execution condition setting, (2) computation graph parsing and distributed strategy search decision-making, (3) distributed task generation, scheduling and compilation execution. Among these, model and execution condition setting is a general necessary process for machine learning and deep learning task execution, which requires system users to provide a description based on some front-end programming language or specification for a specific AI task (or other machine intelligence related tasks), while further setting various execution characteristics and conditions (such as training or inference, data format, algorithm parameters, termination conditions, storage location, resource configuration, etc.). (2) Computation graph parsing and distributed strategy search decision-making and (3) distributed task generation, scheduling, and compilation execution involve the main content of the present disclosure. FIG. 10 illustrates a brief flow example of distributed computing performed by a master-worker architecture of a distributed system according to some embodiments of the present disclosure.

In some embodiments, computation graph parsing and distributed strategy search decision-making include:

step a. [input computation graph] in response to receiving a task for model execution, convert front-end model code or description into a specific format computation graph (such as TensorFlow Graph, represented by nodes and edges indicating relationships between data and computation) for subsequent processing;

step b. [aggregation] divide and aggregate received computation graphs (pre-processing), exclude special cases (such as specific IO processes, custom functions) nodes, outline the main computation graph supporting distributed execution (usually covering more than 99% of the nodes and edges in the graph), and use HLO IR form for subsequent distributed task exploration;

step c. [candidate splitting solution generation] combine execution environment resources to generate distributed execution solutions, generate solutions for distributed exploration strategies based on optimization levels and different rules; since this problem belongs to a NP-hard problem, different optimization levels can be set, affecting the depth and complexity of the searchable strategy space, which further affects whether a globally optimal strategy is explored;

step d. [memory saving solution] according to given task execution environment and physical resources (referring specifically to operational memory), limit feasible strategies for certain special case nodes, for example, when trainable parameters occupy 70% of the single GPU video memory, tensor splitting of trainable parameters is enforced;

step e. [cost-based strategy screening] solve and evaluate distributed strategies for the entire graph based on cost models (Cost Model) to obtain a current optimal solution;

step f. [other operations] when necessary (such as flexible control of the execution environment plan, support for optimization levels, execution search strategies, etc.), return to step c, perform execution strategy exploration for other execution plans of environmental resources, otherwise proceed to the subsequent distributed task generation, scheduling and compilation execution part; directly to execute step f of the process of computation graph parsing and distributed strategy search decision-making in the distributed task generation, scheduling, and compilation execution part;

step g. [computation graph rewriting] determine the final executable distributed strategy, rewrite the computation graph (corresponding HLO IR), record distributed strategy information, prepare for distributed execution;

step h. [establish runtime static graph, static scheduling & execution plan distribution] establish static task graphs and scheduling sequences for execution period according to logical order, and encapsulate and distribute intermediate code (IR) instruction sequences carrying distributed strategy information to local execution services (Worker ends) in the distributed environment;

step i. [cuda local compilation & dapple runtime] upon receipt of tasks by local execution services (Worker ends), invoke compilers (for example, based on cuda) to generate, compile, and execute hardware-related low-level code for distributed intermediate code, and complete runtime preparation and maintenance before and after execution, providing necessary basic function library and communication library call support. Here, dapple corresponds to pipeline data parallel methods used for training.

For step c, after determining a device grouping scheme, possible splitting schemes for all operators (or corresponding instructions) will be generated round by round according to the size of each dimension of the device grouping and the number of devices in each dimension. Instruction splitting scheme generation can arise from several aspects and influences.

1. Basic logic produced by instructions corresponding to operators, see the Batch matmul example shown in FIG. 4, the feasible possibilities logically are enumerated. For instance, a binary operation instruction add = add[1024, 1024] (left_op[1024, 1024], right_op[1024, 1024]) is required to be distributed onto two devices, and three strategies are directly listed: (1) split the binary operation instruction into two pieces along the zero dimension, (2) split the binary operation instruction into two pieces along the first dimension, (3) do not split (or replicate) the binary operation instruction, where each device stores complete data and performs full instruction calculations.

2. Influenced by candidate schemes of upstream and downstream instructions corresponding to operators, splitting schemes are logically derived. This relies on a series of derivation rules consistent with basic logic to maintain these rules according to the meaning of each instruction and confirm whether the distributed strategy of a certain instruction is passed backward to input instructions (producers) of the distributed strategy or forward to consumers of the distributed strategy without missing data during computation (namely requiring communication). For the aforementioned add example, when the 0th dimension is split for add, it necessarily requires (1) left_op and right_op to also be split along the 0th dimension, or (2) no splitting.

3. Related to solving complexity settings or so-called optimization levels, computational graph logic and topology are utilized to reduce search space and accelerate solving speed, thereby binding and pruning splitting schemes for groups of instructions, which include but not limited to: (1) limit critical operator instructions (such as specified compute-intensive instructions, hereinafter referred to as "critical instructions") and the surrounding instructions within an execution path of the computational graph to align with the splitting scheme of the critical instruction; (2) divide the computational graph into subsets with specific input-output characteristics according to model structure (such as each subset having a single input), and align strategies within subsets; (3) expert-based or heuristic rules, such as alignment of distributed scheme for model input parameters with update computation part logic. This part might also be an area requiring continuous evolution, impacting actual user experience and effectiveness.

4. Distributed strategies still accept some special limitations provided by users, mainly to retain compatibility with traditional usage and better support verification and debugging processes.

It should be noted that, for a given device organization scheme and the entire DistHLO IR representation of the computation graph associated therewith, regardless of what the splitting strategy for each instruction is, as long as it is logically feasible, theoretically, this graph can be executed and correct results obtained in the subsequent task generation, execution, and runtime phases of DistHLO, with differences in execution overhead. This is akin to a logically correct C program, regardless of compiler, compilation options, or processor, the result of the correct C program should be consistent, but differing in the generated binary code and execution overhead.

For a DistHLO IR with distributed strategies, when there is an inconsistency between the distributed strategies of two consecutive instructions (or the distributed strategies cannot be derived from each other, for example, add splits along the 0th dimension, but the dist_spec recorded for the left_op splits along the 1st dimension), this is referred to as a splitting mismatch. Handling such situations involves using a communication operation to merge the operand of the preceding instruction (corresponding to the aforementioned left_op) from a distributed strategy state into a complete form, and then transforming the complete form into a form satisfying the splitting strategy of the next instruction (if add specifies a 0th dimension split, then left_op should also be split along the 0th dimension). This process, when considering one dimension, can typically be summarized as being completed by several types of communication operations as shown in FIG. 9.

FIG. 11 illustrates an example of communication operations when the partitioning strategy does not match. It should be understood that FIG. 11 shows conventional examples of communication operations, and in multi-dimensional partitioning scenarios, additional communication operations for addressing strategy mismatches can be contained.

As shown in the upper left of the figure, when the input of a preceding operator is M-dimensional and divided into D parts, the subsequent operator is required to obtain the complete BMN input tensor via an all gather instruction, at which time the communication overhead coefficient of the all gather instruction is (D-1)/D. As shown in the upper right involving partial addition of tensors, the instruction overhead coefficient of all reduce is 1 or 2, whereas as shown in the lower part, the overhead coefficient of an all-to-all instruction after merging and then partitioning is 1/D-1/D*D. The actual communication overhead is obtained by multiplying the aforementioned coefficients by the amount of data that is required to be communicated. Herein, the all gather instruction is used for aggregating all data distributed across all processes into each process. All reduce receives data from multiple senders and ultimately combines the data onto each node. The all-to-all instruction corresponds to a many-to-many scenario.

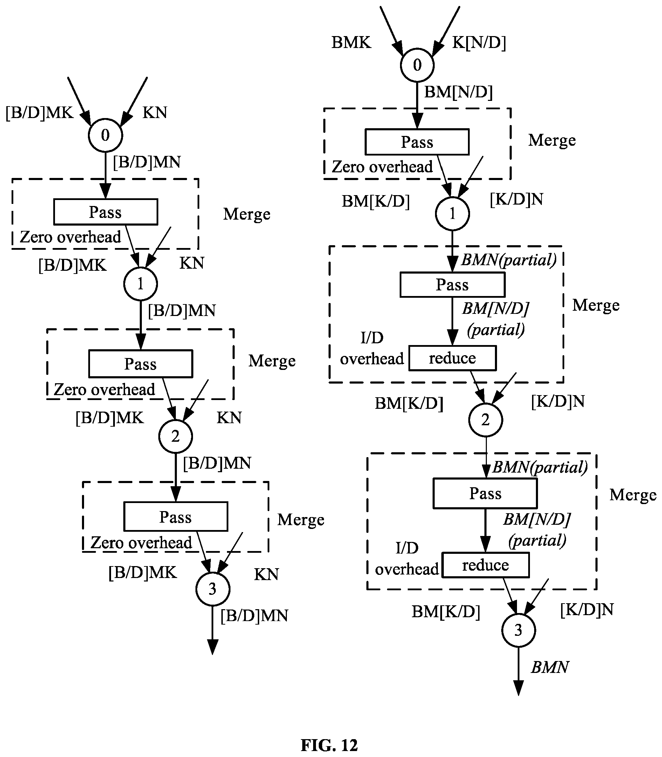

Under complex distributed systems, it is usually impossible to completely avoid these optimized collective communication operations. Therefore, the purpose of optimization is to achieve the lowest runtime overhead. FIG. 12 describes the communication overhead situation for graph structures composed of multiple dot operators under different distributed strategies. The left and right sides of the figure illustrate that with three identical operators 1, 2, 3 and identical tensor shapes, different partitioning strategies lead to different communication overheads. As shown in the left side of the figure, since the tensor output by the preceding operator maintains the same partitioning, there is no need for tensor merging or re-partitioning for the calculation of subsequent operators, hence no communication overhead is required. In the example in the right side of the figure, due to the mismatch between the partitioning strategy of an operator 1 and an operator 2, the tensor output by operator 1 is required to be divided through additional communication operations (such as the reduce instruction shown in the figure) to the tensor form required by the operator 2. Similarly, since the partitioning strategies of the operator 2 and the operator 3 do not match either, additional communication operations are further required to convert the partitioning form, thereby leading to additional communication overhead.

In addition to communication overhead, the computing overhead of the computation graph after distributed execution is also a primary factor to consider during solving. Through using a certain model (such as a linear relationship) to scientifically estimate and combine these overheads, so as to obtain the cost model. Given a device grouping scheme, it is necessary to evaluate the context overhead of distributed strategy candidate set of each instruction to obtain the optimal solution with overall minimum overhead.

Below is provided an example of finding the minimum value according to partitioning and constraints. For each strategy of each instruction (or block), it is modeled as a variable form (binary variables can be used, corresponding to part 1, strategy variable). Through the Cost function (part 2, constant) and the design of constraints among variables (part 3, constraints), finally, the total overhead of the entire graph is formally expressed and the minimum value of the total overhead of the entire graph under constraint conditions is solved as the optimization objective (part 4, optimization objective). Therefore, through the modeling and solving process shown below, the selection of distributed strategies is transformed into a mathematical problem of Integer Linear Programming (ILP), which can be solved using a mathematical solver. For instance, a dedicated solver is utilized to accelerate this process.

1. Strategy variables (0-1)

```
S[i].B
S[i].M
S[i].N
S[i].K
S[i].B_S[j].B
S[i].B_S[j].M
S[i].B_S[j].N
S[i].B_S[j].K
  ...
S[i].K_S[j].B
S[i].K_S[j].M
S[i].K_S[j].N
S[i].K_S[j].K
```

2. Constants (int64)

```
Cost_S[i].B_S[j].B
Cost_S[i].B_S[j].M
Cost_S[i].B_S[j].N
Cost_S[i].B_S[j].K
  ...
Cost_S[i].K_S[j].B
Cost_S[i].K_S[j].M
Cost_S[i].K_S[j].N
Cost_S[i].K_S[j].K
```

3. Constraints:

$$S[i].B + S[i].M + S[i].N + S[i].K = 1$$

$$S[i].B\_S[j].B + S[i].B\_S[j].M + S[i].B\_S[j].N + S[i].B\_S[j].K = S[i].B$$

...

$$S[i].K\_S[j].B + S[i].K\_S[j].M + S[i].K\_S[j].N + S[i].K\_S[j].K = S[i].K$$

4. Optimization objective:

$$... + Cost\_S[0].B\_S[1].B * S[0].B\_S[1].B + Cost\_S[0].B\_S[1].M * S[0].B\_S[1].M +...$$

In some embodiments, due to the continuous expansion of the model computation graph, it will make a large number of global variables to be solved (distributed strategy), slowing down the solving process. Therefore, the embodiments of the present disclosure can simplify the variable space through optimization levels during the distributed strategy generation phase. Additionally, optimization levels can be set. In other words, different topological relationship analysis algorithms are used for decomposing the entire graph into several interrelated smaller sub-graphs. Costs between associated edges across sub-graphs are recorded and evaluated. The sub-graphs are combined using greedy or dynamic programming algorithms, while obtaining local optimal solutions within the sub-graphs through the aforementioned ILP, thereby significantly reducing the cost of solving and making the solving process controllable in engineering.

As described above in conjunction with FIG. 4 to FIG. 12, examples of operator splitting based on grouping and optimizing model parallelism are provided by some embodiments of the present disclosure, which corresponds to the generation of operator-level distributed strategies for optimizing data parallelism and model parallelism in task execution. In some embodiments of the present disclosure, before performing operator splitting, the computation graph can first be split, thereby introducing optimization of deep learning task execution based on pipeline parallelism.

In some embodiments, Pipeline parallelism requires dividing a complete computation graph into several sub-graphs according to certain logic (i.e., execution order required to be considered). The sub-graphs obtained through pipeline parallel division are commonly referred to as stage sub-graphs. For computation of each stage sub-graph, the aforementioned operator-level distributed strategy is further applied to execute on a group of computing devices, and data dependencies between stage sub-graphs can be accomplished through point-to-point (P2P) communication. An important aspect of pipeline parallelism is that within the same iteration step, each group of computing devices continuously computes several micro-batches of sample data, to achieve higher utilization of computing resources over macroscopic time periods. FIG. 13 illustrates two examples of pipeline parallelism. In the examples of FIG. 13, a complete computation graph is divided into three stage sub-graphs executed by three GPUs (i.e., GPU0~GPU2). Figures (a) and (b) both use the same micro-batch size (the seven micro-batches indicated by numbers 0~6 in the figure), differing in the sequence of micro-batch scheduling execution, which affects the amount and distribution of memory resource occupancy during execution, i.e., leading to different quantities and distributions of bubbles (as represented by blank spaces indicating GPU idleness in the figure). It should be noted that, for simplicity, the schematic diagram in FIG. 13 considers pipeline parallelism without containing operator-level distributed execution strategies.

According to the characteristics of deep learning models, backward computations (derivation/gradient calculation) for a given model structure (set of operators) usually depend on partial results of forward computations. When splitting the entire graph into stage sub-graphs, such relationships are further considered, ensuring that forward and backward computations occur on the same device (i.e., both parts are located in the same stage sub-graph, or separate sets of mirrored stage sub-graphs for forward and backward computations are arranged but scheduled for execution on the same device, with the latter resulting in twice the number of stage sub-graphs as groups of devices), which is a more friendly option for storing and updating model parameters. This relationship will also be utilized in the optimization of pipeline parallelism strategy generation as described below in the present disclosure.

In some embodiments of the present disclosure, as mentioned earlier, factorization can be performed on the total number of hardware devices corresponding to currently allocated hardware resources for the deep learning task to obtain at least one grouping scheme (for example, 16 hardware devices being factored into 2*8 by two factors, into 4*2*2 by three factors, or corresponding to a single factor 16). When the at least one grouping scheme includes multiple factors, the at least one grouping scheme is first used for splitting the computation graph to obtain multiple stage sub-graphs. Subsequently, for the divided stage sub-graphs, respective operator-level distributed splitting schemes are generated; or after performing operator splitting or between two rounds of operator splitting, splitting of stage sub-graphs is carried out.

For pipeline parallelism, it is desired that the division of each stage sub-graph is balanced, including having roughly equal computational time consumption on execution devices corresponding to each stage sub-graph. Additionally, it is hoped that the communication volume between stage sub-graphs is as minimal as possible. Moreover, it is ensured that the computation process of each stage sub-graph does not exhaust memory resources on the device corresponding to each stage sub-graph.

Therefore, key to automatic distributed strategy generation for pipeline parallelism lies in how to reasonably divide stage sub-graphs based on a given computation graph. On this basis, the selection of a reasonable number of micro-batches is assessed, combined with the aforementioned process of generating operator-level distributed strategy schemes, thus forming a complete distributed execution scheme containing optimizations for pipeline parallelism and operator-level parallelism.

When the distributed execution strategy includes optimizations for pipeline parallelism, additional information, namely stage sub-graph numbering information, is required to be appended to the dist_spec description in HLO IR instructions of the computation graph. Instructions corresponding to operators within the same stage sub-graph will be scheduled to execute on the same group of devices during execution. Pipeline parallelism also requires setting the number of micro-batches, and the essence of dividing micro-batches is data parallelism, i.e., starting from input instructions, splitting along the 0th dimension, with the split count being the number of micro-batches. Specific handling of this part can be achieved either directly recorded on dist_spec or by replicating several computation graphs and modifying the shapes of operands corresponding to micro-batches.

In order to obtain multiple sub-graphs with the same (or similar) computation time period, reasonable evaluation of the splitting positions within the computation graph is required. In some embodiments, an operation of evaluating the splitting positions of the computation graph to obtain the multiple stage sub-graphs with the identical computing time period includes the following steps. Critical operators in the computation graph are selected and total computing overhead of the critical operators is counted. Multiple stage intervals are equally split based on the total computing overhead. Based on computing overhead of each critical operator, computing overhead of the preceding critical operator and computing overhead of the following critical operator, an interval range of this critical operator is set. An optimized solution for minimizing total communication overhead of cross-interval tensors as the splitting position is obtained so that each critical operator falls within the interval range of this critical operator.

To better understand the computation graph partitioning method of the present disclosure, description is provided below with reference to FIG. 14. FIG. 14 illustrates an example of evaluating positions for partitioning a computation graph based on computation time. That is, FIG. 13 shows how to determine numbering information of stages for each operator (i.e., each instruction) in the computation graph. Since forward and backward computations of models are usually executed on the same set of devices, this description takes the forward graph computation part (i.e., inference process) as an example to describe how to determine which stage each operator belongs to, and subsequently, the backward graph can be determined through mirroring. Determination regarding forward graphs and backward graphs can be annotated during client-side graph construction and aggregation processes or obtained through analysis of graph structures.

Firstly, critical operators in the graph are selected. For instance, specified computation-intensive operators mentioned (in other embodiments, assessments are further made for all executions, though this significantly increases computational complexity), and computation overheads of these operators are evaluated according to the cost model. Gray nodes in the figure correspond to the critical operators, while white nodes correspond to non-critical operators. Numbers in the gray nodes represent computed overheads by the cost model, whereas '0' in the white nodes indicates that computation overheads of these nodes are not considered.

Subsequently, the total overhead Cost_all of all critical operators is calculated. According to the required number of stage-based sub-graphs, an interval [0, Cost_all] is evenly divided into n stage-based intervals.

For each critical operator, a "predecessor set" and a "successor set" of this critical operator are identified, and the total sum of the predecessor overhead and the successor overhead are calculated. One interval value from the previous step is obtained by adding the predecessor overhead to the overhead of this critical operator. And another interval value from the previous step is obtained by subtracting the successor overhead and the overhead of this critical operator from Cost_all, so as to set the range of an interval for this critical operator. As for the remaining non-critical operators, the stage-based interval range of each non-critical operator is determined by taking the union of the ranges of preceding and succeeding critical operators. The left and right parts of FIG. 14 show identical computation graphs and respectively illustrate the interval division for a critical instruction a and a critical instruction b. In the example of FIG. 13, the computation graph includes a total of 9 critical operators, with a total overhead Cost_all of 16. It is assumed that there are 4 groups, i.e., the computation graph is divided into 4 stage-based sub-graphs, the interval [0, Cost_all] is evenly divided into n stage-based intervals corresponding to:

Interval 0: 0~4;

Interval 1: 4~8;

Interval 2: 8~12;

Interval 3: 12~16.

In the example on the left, the predecessor overhead of the critical operator a is 0, the successor overhead of the critical operator a is 14, the sum of adding the predecessor overhead to the overhead of the critical operator a is 1 (falling into Interval 0), and the difference of subtracting the successor overhead and the overhead of this critical operator a from Cost_all is 1 (also falling into Interval 0). Therefore, the interval range for a critical node a is [0, 0]. In other words, in the stage-based sub-graph partitioning scheme of this critical node a, it will be partitioned into the 0th sub-graph.

Correspondingly, in the example on the right, the predecessor overhead of the critical operator b is 3, the successor overhead is 4, the sum of adding the predecessor overhead to the overhead of the critical operator b is 6 (falling into Interval 1), and the difference of subtracting the successor overhead and the overhead of this critical operator b from Cost_all is 9 (falling into Interval 2). Thus, the interval range for a critical node b is [1, 2]. In other words, in the stage-based sub-graph partitioning scheme of this critical node b, it will be partitioned into either the 1st or 2nd sub-graph.

Corresponding to all edges in the entire graph, modeling and solving are performed according to the stage-based intervals of critical operators to determine specific stage values for each operator. In some embodiments, the total tensor transmission overhead of all cross-stage edges serves as a factor in an objective function for solving the minimum value. After obtaining all relational expressions, the computation graph partitioning that results in the minimum total transmission overhead is acquired.

In some embodiments, the backward graph is solved in a mirrored stage manner according to the above logic, while considering the correspondence between the forward graph and the backward graph as constraints during modeling and solving.

After determining the computation graph partitioning, based on input batch information, a range of possible values for a micro-batch size is determined to ensure that the utilization rate of the entire pipeline resources exceeds a certain threshold (e.g., 80%, namely a bubble rate less than 20%), followed by enumeration, and the first divisible number of micro-batches is taken as the number of micro-batches adopted for this pipeline parallel scheme, so as to acquire operator-level distributed strategies to uniformly assess overall overheads.

In some embodiments of the present disclosure related to pipeline parallel optimization, although additional computation graph partitioning is involved, it remains fundamentally an automated distributed strategy optimization method. Therefore, as mentioned above, the pipeline scheme is required to undergo overhead assessment against schemes related to operator-level distribution, so as to ultimately select the optimal solution. In other words, in scenarios such as allocating 16 GPU cards (hardware devices) for model parallel execution for the current deep learning task, various cutting methods under conditions like 4*4 (pure operator secondary partitioning), 4 (computation graph partitioning)*2*2 (operator secondary partitioning), 2 (computation graph partitioning)*8 (operator primary partitioning), etc., are assessed for overhead, and the best solution is chosen from the various cutting methods (including computation graph partitioning or operator partitioning). Of course, in different implementations, users may require pipeline parallelism, at which point, after generating all operator distributed strategies corresponding to different groupings, overhead assessments are conducted among generated pipeline parallels to select the best solution.

FIG. 15 illustrates a structural schematic diagram of a computing device used for implementing an optimization method for distributed execution of a deep learning task according to some embodiments of the present disclosure.

As shown in FIG. 15, the computing device 1500 includes a memory 1510 and a processor 1520.

The processor 1520 is a multi-core processor or includes multiple processors. In some embodiments, the processor 1520 includes a general-purpose main processor and at least one special co-processor, such as a graphics processing unit (GPU), digital signal processor (DSP), and so on. In some embodiments, the processor 1520 is implemented using custom circuits, for example, Application Specific Integrated Circuit (ASIC) or Field Programmable Gate Arrays (FPGA).

The memory 1510 includes various types of storage units, for example, system memory, read-only memory (ROM), and permanent storage apparatuses. The ROM stores static data or instructions required for the processor 1520 or other modules of a computer. A permanent storage device is a read-write storage apparatus. The permanent storage apparatus is a non-transitory storage apparatus that does not lose stored instructions and data even when a computer is powered off. In some embodiments, a large-capacity storage apparatus (for example, a magnetic or optical disk, and a flash memory) are set as the permanent storage apparatus. In other embodiments, the permanent storage apparatus is a removable storage apparatus (for example, a floppy disk, and an optical drive). A system memory is a read-write storage apparatus or a transitory read-write storage apparatus, such as a dynamic random access memory. The system memory stores some or all instructions and data required for operation of the processor when running. Additionally, the memory 1510 includes any combination of computer-readable storage medium, including various types of semiconductor memory chips (DRAM, SRAM, SDRAM, flash memory, programmable read-only memory), magnetic disks, and/or optical disks can also be used. In some embodiments, the memory 1510 includes readable and/or writable removable storage devices, for example, compact discs (CDs), read-only digital versatile discs (such as DVD-ROM, dual-layer DVD-ROM), read-only Blu-ray discs, ultra-density optical discs, flash memory cards (such as SD cards, minSD cards, Micro-SD cards, etc.), magnetic floppy disks, and so on. Computer-readable storage medium do not include carrier waves and transient electronic signals transmitted through wireless or wired transmission.

The memory 1510 is arranged for storing executable code. When the executable code is processed by the processor 1520, the processor 1520 is controlled to execute the optimization method for distributed execution of the deep learning task mentioned above.

The optimization method for distributed execution of the deep learning task according to some embodiments of the present disclosure has been described in detail with reference to the drawings above. According to general characteristics of deep learning model computation, some embodiments of the present disclosure design a form of distributed strategy description and derivation verification principle without specific model assumptions, and realize fully automatic generation rules for distributed strategy candidates, aiming to cover the solution space as much as possible. The combination of multi-level dynamic programming algorithms and ILP integer linear programming methods is utilized to divide problem solving into multiple levels and establish rich pruning strategies to improve the efficiency of searching for solutions, enabling efficient and rapid solving on demand. Cost model constraints containing communication and memory access and reasonable evaluation strategies are designed for the search of candidate solutions. Multiple levels of optimization are set to provide solutions with different optimization effects according to the quality of service requirements in different scenarios.

The solution achieves a method for automatically generating a fully automatic distributed training method, where users are not required to make any annotation modifications on a single-machine model, thereby achieving distributed training through configuration of execution parameters.

The search strategy of the solution is fast and provides different optimization levels, from sub-second to minutes, all capable of generating correct distributed training schemes with differences in operational performance.

The best strategy searched based on the cost model in the solution possesses excellent execution efficiency and scalability, thereby matching or even surpassing manual training solutions for deep models provided by traditional experts.

The algorithm of the solution is universally applicable to various models, unrestricted by the width or narrowness of model parameter structures, depth of layers, density or sparsity of model computations, being generally applicable and capable of automatically customizing optimal strategies for each model, unlike some competing solutions that provide fixed-pattern solutions for specific types of models.

Additionally, some embodiments of the present disclosure further provide a computer program or a computer program product. The computer program or the computer program product includes computer program code instructions for executing various steps of the method according to some embodiments of the present disclosure as described above.

Alternatively, some embodiments of the present disclosure further provide a non-transitory machine-readable storage medium (or computer-readable storage medium, or machine-readable storage medium), storing executable code (or computer programs, or computer instruction codes). When the executable code (or computer program, or computer instruction codes) is executed by a processor of an electronic device (or a computing device, a server, etc.), the processor is controlled to execute various steps of the method according to some embodiments of the present disclosure as described above.

A person having ordinary skill in the art will further understand that various exemplary logic blocks, modules, circuits, and algorithm steps described in some embodiments of the present disclosure may be implemented as electronic hardware, computer software, or a combination thereof.

Thus, the embodiments of the present disclosure can automatically generate optimized distributed execution strategies for allocated hardware devices in response to the computation graph and the number of allocated hardware devices being known. According to the universal characteristics of deep learning model calculations, the embodiments of the present disclosure design universal forms of distributed strategy descriptions and derivation verification methods, thereby realizing fully automated rule formulation for generating distributed segmentation strategy candidates and screening out the best strategies. Furthermore, the generation of candidate segmentation strategies are limited and screening time is controlled based on optimization levels.

Flowcharts and block diagrams in the figures show possible architectures, functionalities, and operations of systems and methods according to multiple embodiments of the present disclosure. In this regard, each block in the flowchart or block diagram may represent a module, a segment of a program, or a portion of code containing at least one executable instruction for implementing specified logical functions. It should also be noted that in some alternative implementations, the functions marked in the blocks may occur out of the order noted in the figures. For example, two consecutive blocks may actually be executed substantially in parallel, and these two consecutive blocks may sometimes be executed in reverse order, depending upon the functionality involved. It should also be noted that each block in the flowchart and/or block diagram, and combinations of blocks in the flowchart and/or block diagram, can be implemented by a dedicated hardware-based system for performing specified functions or operations, or can be implemented by a combination of dedicated hardware and computer instructions.

Various embodiments of the present disclosure are described above, the aforementioned explanation is illustrative and not exhaustive, and does not limit the disclosed embodiments. Without departing from the scope and spirit of the illustrated embodiments, many modifications and variations will be apparent to a person having ordinary skill in the art. The selection of terms used herein aims at best explaining the principles of the embodiments, practical applications, or improvements to technology in the market, or enabling other persons having ordinary skill in the art to understand the embodiments disclosed herein.

**Claims**

1. An optimization method for distributed execution of a deep learning task, comprising:

   generating a computation graph based on a deep learning task and allocating hardware resources for the distributed execution of the deep learning task;
   grouping the allocated hardware resources to obtain at least one grouping scheme, each grouping scheme comprising at least one factor obtained by factorizing the number of devices in the hardware resources;
   for each grouping scheme, based on at least one factor under this grouping scheme and tensor information related to a plurality of operators contained in the computation graph, obtaining a plurality of candidate splitting solutions, wherein the plurality of candidate splitting solutions are acquired by using the value of at least one factor under this grouping scheme as a splitting value to perform splitting on tensors related to the plurality of operators in different dimensions; and
   selecting, by using a cost model, an optimal efficiency solution from the plurality of candidate splitting solutions as a distributed execution splitting solution, wherein the distributed execution splitting solution is used for executing the deep learning task by the hardware resources.

2. The method according to claim 1, wherein after obtaining the at least one grouping scheme, the method further comprises:
   for each grouping scheme, using the value of the at least one factor under this grouping scheme as the splitting value, and splitting the computation graph into a plurality of stage sub-graphs for pipeline parallel execution.

3. The method according to claim 2, wherein splitting the computation graph into the plurality of stage sub-graphs for pipeline parallel execution comprises:
   evaluating splitting positions of the computation graph to obtain the plurality of stage sub-graphs with identical computing time period.

4. The method according to claim 2, wherein evaluating the splitting positions of the computation graph to obtain the plurality of stage sub-graphs with the identical computing time period comprises:

   selecting critical operators in the computation graph and counting total computing overhead of the critical operators;
   equally splitting a plurality of stage intervals based on the total computing overhead;
   based on computing overhead of each critical operator, computing overhead of the preceding critical operator and computing overhead of the following critical operator, setting an interval range of this critical operator; and
   obtaining an optimized solution for minimizing total communication overhead of cross-interval tensors as the splitting position so that each critical operator falls within the interval range of this critical operator.

5. The method according to claim 1, wherein for each grouping scheme, based on the at least one factor under this grouping scheme and the tensor information related to the plurality of operators contained in the computation graph, obtaining the plurality of candidate splitting solutions comprises:

   counting total storage space size of training parameter input tensors related to the plurality of operators; and
   in response to the total storage space size exceeding a predetermined threshold, selecting at least one training parameter input tensors for splitting to obtain the plurality of candidate splitting solutions.

6. The method according to claim 1 or claim 5, wherein for each grouping scheme, based on the at least one factor under this grouping scheme and the tensor information related to the plurality of operators contained in the computation graph, obtaining the plurality of candidate splitting solutions comprises:

   in response to the current grouping scheme containing the plurality of factors, using the value of one factor among the plurality of factors as a first splitting value to perform one-dimensional splitting on tensors related to the plurality of operators of the computation graph; and
   on the basis of one-dimensional splitting, using the value of another factor other than a factor used as the first splitting value among the plurality of factors as a second splitting value to perform two-dimensional splitting on tensors related to the plurality of operators of the computation graph;
   wherein the plurality of candidate splitting solutions of the current grouping scheme are obtained by permutation and combination of the two-dimensional splitting of the plurality of operators.

7. The method according to claim 1, wherein the plurality of candidate splitting solutions are acquired by using the value of at least one factor under this grouping scheme as the splitting value to perform splitting on the tensors related to the plurality of operators in different dimensions comprises:

> for each operator, performing preset dimension splitting on a tensor related to this operator to get a group of splitting arrangements by using a preset optimization strategy; and
> summarizing the splitting arrangements of each operator in the computation graph to obtain a splitting arrangement combination under this grouping scheme, and taking this splitting arrangement combination as the plurality of candidate splitting solutions.

8. The method according to claim 7, wherein performing preset dimension splitting on a tensor related to this operator comprises:
performing any dimension splitting on at least one tensor related to this operator, or not performing splitting on tensors related to this operator, wherein the tensors related to this operator comprise input tensors and output tensors of this operator, and the splitting is uniform splitting on a target dimension based on the splitting value.

9. The method according to claim 8, wherein the preset optimization strategy comprises at least one of the following strategies:

> strategy A) splitting the computation graph into a plurality of optimized sub-graphs, each optimized sub-graph comprising at least one operator;
> for tensors of each operator within each optimized sub-graph, performing splitting in a way for not producing communication overhead within this optimized sub-graph;
> strategy B) determining at least one critical operator, and performing arbitrary dimensional splitting on tensors of the at least one critical operator;
> for other operators within a predetermined adjacent range of the at least one critical operator, and performing splitting in a way for not producing communication overhead within this predetermined adjacent range; and
> strategy C) selecting rules matching the current computation graph and/or tensors from a preset rule library;
> performing splitting on associated operators in the current computation graph based on matched rules.

10. The method according to claim 9, wherein the preset rule library comprises heuristic rules to be extended and added.

11. The method according to claim 1, wherein the at least one factor comprises:

> one factor, the value of this factor corresponding to the number of hardware devices contained in the hardware resources; or
> a plurality of factors, the product of values of the plurality of factors corresponding to the number of hardware devices contained in the hardware resources.

12. The method according to claim 1, wherein grouping the allocated hardware resources to obtain the at least one grouping scheme comprises:
factorizing the number of devices in the hardware resources into integers to obtain a plurality of grouping schemes, wherein a factorization scheme of each grouping scheme is different.

13. The method according to claim 12, wherein selecting, by using the cost model, the optimal efficiency solution from the plurality of candidate splitting solutions as the distributed execution splitting solution comprises:

> for each grouping scheme, selecting, by using the cost model, a first candidate splitting solution with optimal efficiency under this grouping scheme to obtain a plurality of first candidate splitting solutions; and
> selecting a second candidate splitting solution with optimal efficiency from the plurality of first candidate splitting solutions, and setting the second candidate splitting solution as the distributed execution splitting solution.

14. The method according to claim 1, wherein selecting, by using the cost model, the optimal efficiency solution from the plurality of candidate splitting solutions as the distributed execution splitting solution comprises:
selecting, by using the cost model, the optimal efficiency solution based on communication overhead and computing overhead.

15. The method according to claim 1, wherein a description method of the plurality of candidate splitting solutions comprises:

high-level optimization intermediate representation (HLO IR) for the plurality of operators and splitting state description information for each HLO IR.

16. The method according to claim 15, wherein selecting, by using the cost model, the optimal efficiency solution from the plurality of candidate splitting solutions as the distributed execution splitting solution comprises:

modeling splitting strategies of each HLO IR into variables based on the splitting state description information; setting constraint conditions between variables; solving the minimum value under the constraint conditions for full graph modeling of each candidate splitting solution based on the cost model; and taking the splitting state description information of each HLO IR corresponding to the minimum value as the distributed execution splitting solution.

17. The method according to claim 1, further comprising:

generating task sub-graphs based on the distributed execution splitting solution; and sending the task sub-graphs to the hardware resources for the execution of the deep learning task.

18. A distributed system for executing a deep learning task, comprising:

a master node, arranged for executing the optimization method for distributed execution of the deep learning task according to any one of claims 1-17 and sending task sub-graphs generated based on the distributed execution splitting solution to the hardware resources for the execution of the deep learning task; and an execution node, comprising at least one hardware device as the hardware resources, arranged for executing the deep learning task based on the distributed execution splitting solution.

19. The distributed system according to claim 18, wherein the master node sending the task sub-graphs generated based on the distributed execution splitting solution to the hardware resources for the execution of the deep learning task comprises:

based on the distributed execution splitting solution, generating a Directed Acyclic Graph (DAG) task graph for the hardware resources and determining a task execution order; generating the task sub-graphs containing the task execution order for each execution node; and sending dedicated task sub-graphs to each execution node for execution.

20. The distributed system according to claim 18, wherein the master node is further arranged for:

aggregating the current running status of execution nodes; and allocating the hardware resources for various deep learning task based on the current running status and the deep learning task.

21. A computing device, comprising:

a processor; and a memory storing executable code, when the executable code is executed by the processor, controlling the processor to execute the method as claimed in any one of claims 1-17.

22. A non-transitory machine-readable storage medium storing executable code, wherein when the executable code is executed by a processor of an electronic device, controlling the processor to execute the method as claimed in any one of claims 1-17.

**FIG. 1**

**FIG. 2**

**FIG. 3**

**FIG. 4**

A computation graph based on a deep learning task is generated and hardware resources are allocated for the distributed execution of the deep learning task ⟋⟍ S510

The allocated hardware resources are grouped to obtain at least one grouping scheme ⟋⟍ S520

For each grouping scheme, based on at least one factor under this grouping scheme and tensor information related to multiple operators contained in the computation graph, multiple candidate splitting solutions are obtained ⟋⟍ S530

An optimal efficiency solution is selected, by using a cost model, from the multiple candidate splitting solutions as a distributed execution splitting solution for executing the deep learning task by the hardware resources ⟋⟍ S540

**FIG. 5**

Three-dimensional tensor BMK
0th dimension B=2
1st dimension M=2
2nd dimension K=3

OP1

Three-dimensional tensor BMK
0th dimension B=2
1st dimension M=2
2nd dimension K=3

OP2

Operator 1
ADD

OP3

Three-dimensional tensor BMK
0th dimension B=2
1st dimension M=2
2nd dimension K=3

Two-dimensional tensor KN
0th dimension K=3
1st dimension N=2

OP4

Operator 2
DOT

Three-dimensional tensor BMN
0th dimension B=2
1st dimension M=2
2nd dimension N=2

OP5

**FIG. 6A**

Partitioning method 1: OP1 0th dimension

Partitioning method 2: OP1 1st dimension

Partitioning method 3: OP2 0th dimension

Partitioning method 4: OP2 1st dimension

Partitioning method 5:
OP1 0th dimension + OP2 0th dimension

Partitioning method 6:
OP1 1st dimension + OP2 1st dimension

Partitioning method 7:
OP1 1st dimension + OP2 0th dimension

Partitioning method 8:
OP1 0th dimension + OP2 1st dimension

Partitioning method 9: No partitioning

**FIG. 6B**

Partitioning method 1: OP1 0th dimension

Device 1: 18 numbers, 6 additions

Device 2: 18 numbers, 6 additions

Concatenate to obtain OP3

**FIG. 6C**

Partitioning method 5:
OP1 0th dimension + OP2 0th dimension

Device 1: 12 numbers, 6 additions

Device 2: 12 numbers, 6 additions

Concatenate to obtain OP3

**FIG. 6D**

Partitioning method 6:
OP1 1st dimension + OP2 1st dimension

Device 1: 12 numbers, 6 additions

Device 2: 12 numbers, 6 additions

Concatenate to obtain OP3

**FIG. 6E**

Partitioning method 7:
OP1 1st dimension + OP2 0th dimension

Device 1: 12 numbers, 3 additions

Device 2: 12 numbers, 3 additions

Logically infeasible, cannot concatenate to obtain complete OP3

**FIG. 6F**

Device grouping [(2+4), (1+8)]

IR first partitioning method candidate set generation (2)

IR second partitioning method candidate set generation (4)

Evaluate and solve the optimal partitioning scheme

Record the best scheme and partitioning of (2+4)

IR first partitioning method candidate set generation (8)

Evaluate and solve the optimal partitioning scheme

Record the best scheme and partitioning of (1+8)

Select the better one between the best scheme of (2+4) and the best scheme of (1+8)

**FIG. 7**

<u>800</u>

820

810

Deep learning task execution request

Partitioning strategy

820

Group-based partitioning generation

820

**FIG. 8**

Main node

Deep learning model

Hardware resource description

Automatic distributed planning

Cluster execution plan graph

Task dispatch

Strategy exploration

Distributed execution

Execution node 1

Single-node execution plan graph

Running

• • •

Execution node m

Single-node execution plan graph

Running

**FIG. 9**

```
┌─────────────────┐                              ┌─────────────────┐
│ Input computation│                             │ Computation graph│
│      graph       │                             │    rewriting     │
└─────────────────┘                              └─────────────────┘
         │                                                │
         ▼                                                ▼
┌─────────────────┐                              ┌─────────────────┐
│   Aggregation   │                              │ Establish runtime│
│                 │                              │   static graph   │
└─────────────────┘                              └─────────────────┘
         │                                                │
         ▼                                                ▼
┌─────────────────┐                              ┌─────────────────┐
│ Candidate        │                             │Static scheduling │
│ partitioning     │                             │                  │
│ scheme generation│                             └─────────────────┘
└─────────────────┘                                       │
         │                                                ▼
         ▼                                       ┌─────────────────┐
┌─────────────────┐                              │ Execution scheme │
│Memory saving     │                             │    dispatch      │
│    scheme         │                             └─────────────────┘
└─────────────────┘                                       │
         │                                                ▼
         ▼                                       ┌─────────────────┐
┌─────────────────┐                              │  Cuda local      │
│Strategy screening│                             │  compilation     │
│based on          │                             └─────────────────┘
│partitioning      │                                      │
└─────────────────┘                                       ▼
         │                                       ┌─────────────────┐
         ▼                                       │ Dapple runtime   │
     ◇ Other operations ◇                        └─────────────────┘
```

**FIG. 10**

```
  │ B[M/D]N                              │ BMN(partial)
  ▼                                      ▼
┌──────────┐  partition coefficient    ┌──────────┐  partition coefficient
│all gather│    =(D-1)/D               │all reduce│     =1 or 2
└──────────┘                           └──────────┘
  │ BMN                                   │ BMN
  ▼                                      ▼
```

```
       │ BM[N/D]
       ▼
   ┌──────────┐  partition coefficient
   │all-to-all│    =1/D-1/(D*D)
   └──────────┘
       │ B[M/D]N
       ▼
```

**FIG. 11**

**FIG. 12**

Time

(a)

(b)

Forward   Backward

**FIG. 13**

**FIG. 14**

**FIG. 15**

## INTERNATIONAL SEARCH REPORT

| International application No. |
|---|
| **PCT/CN2023/132073** |

### A. CLASSIFICATION OF SUBJECT MATTER

G06F 9/50(2006.01)i; G06N 3/0464(2023.01)i

According to International Patent Classification (IPC) or to both national classification and IPC

### B. FIELDS SEARCHED

Minimum documentation searched (classification system followed by classification symbols)

IPC: G06F, G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 分布式, 深度, 学习, 任务, 计算图, 资源, 分组, 因子, 方案, 切分, 模型, 优化, distributed, deep, learning, task, compute, graph, resource, group, factor, scheme, slice, model, optimization

### C. DOCUMENTS CONSIDERED TO BE RELEVANT

| Category* | Citation of document, with indication, where appropriate, of the relevant passages | Relevant to claim No. |
|---|---|---|
| PX | CN 115543639 A (ALIBABA CLOUD COMPUTING LTD.) 30 December 2022 (2022-12-30) <br> claims 1-22 | 1-22 |
| A | CN 112686374 A (SUN YAT-SEN UNIVERSITY) 20 April 2021 (2021-04-20) <br> description, paragraphs 96-116 | 1-22 |
| A | CN 114611688 A (ALIBABA CLOUD COMPUTING LTD.) 10 June 2022 (2022-06-10) <br> entire document | 1-22 |
| A | US 2020104716 A1 (SAMSUNG ELECTRONICS CO., LTD.) 02 April 2020 (2020-04-02) <br> entire document | 1-22 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 January 2024** | **12 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132073**

| Patent document cited in search report | | | Publication date (day/month/year) | Patent family member(s) | | | Publication date (day/month/year) |
|---|---|---|---|---|---|---|---|
| CN | 115543639 | A | 30 December 2022 | None | | | |
| CN | 112686374 | A | 20 April 2021 | None | | | |
| CN | 114611688 | A | 10 June 2022 | None | | | |
| US | 2020104716 | A1 | 02 April 2020 | KR | 20200023238 | A | 04 March 2020 |
| | | | | IN | 201841031680 | A | 28 February 2020 |

Form PCT/ISA/210 (patent family annex) (July 2022)

**REFERENCES CITED IN THE DESCRIPTION**

**Patent documents cited in the description**

- CN 202211530586